(19) Europäisches Patentamt
European Patent Office
Office européen des brevets

(11) **EP 2 527 139 B1**

(12) **EUROPEAN PATENT SPECIFICATION**

(45) Date of publication and mention
of the grant of the patent:
**08.01.2014 Bulletin 2014/02**

(51) Int Cl.:
*B32B 5/24* *(2006.01)*          *B32B 27/32* *(2006.01)*
*B29C 70/08* *(2006.01)*

(21) Application number: **12005970.4**

(22) Date of filing: **07.09.2005**

(54) **Sandwich structure and integrated formed article using the same**

Sandwich-Struktur und integrierter ausgebildeter Artikel damit

Structure sandwich et article formé intégré l'utilisant

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **07.09.2004 JP 2004259451
16.03.2005 JP 2005074811**

(43) Date of publication of application:
**28.11.2012 Bulletin 2012/48**

(62) Document number(s) of the earlier application(s) in
accordance with Art. 76 EPC:
**05778257.5 / 1 803 551**

(73) Proprietor: **Toray Industries, Inc.**
**Tokyo, 103-8666 (JP)**

(72) Inventors:
• **Honma, Masato**
**7913193 Ehime (JP)**

• **Tsuchiya, Atsuki**
**Ehime 791-8043 (JP)**
• **Takebe, Yoshiki**
**Ehime 791-3193 (JP)**
• **Ishikawa, Syuji**
**Yokohama-shi, 2400016
Kanagawa (JP)**

(74) Representative: **Kador & Partner
Corneliusstraße 15
DE-80469 München (DE)**

(56) References cited:
**EP-A2- 1 072 396          JP-A- 7 112 501
JP-A- 10 316 771          JP-A- 11 300 870
JP-A- 63 060 743          JP-A- 2003 080 648
JP-A- 2004 140 255**

**Description**

The present invention relates to a sandwich structure excellent in lightweight, thinness and stiffness. In more detail, a sandwich structure of the invention has one each fiber reinforced component disposed on both surfaces of a specific core component and has properties especially excellent in lightweight and thinness.

Further, the invention relates to an integrally formed article, in which a member having a planar form comprising the sandwich structure and another member with its shape changed in the thickness direction, are integrated. The integrally formed article can be preferably used for electric and electronic apparatuses, office automation apparatuses, electric household appliances, medical appliances, automobile parts, aircraft parts, building materials, etc.

BACKGROUND ART

Fiber reinforced plastics (FRP) reinforced by a group of continuous reinforcing fibers are often used as materials of structures requiring lightweight and mechanical properties for such applications as transport apparatuses including aircraft, automobiles, two wheelers and bicycles, sports goods including tennis rackets, golf club shafts and fishing rods, architectural structures including earthquake-resisting reinforcing materials, etc.

As a lighter weight structure having sufficient mechanical properties, a sandwich structure in which one each FRP component is disposed on the skins of a lightweight core component is known. For reducing the weight of a structure, a core component lighter in weight is selectively used, and a balsa core, honeycomb core, urethane foam core, etc. are frequently used as core components. Further, such sandwich structures are designed to satisfy practically required mechanical properties and are widely used as secondary structural materials of aircraft and also as automobile members, architectural members, panel members, etc.

Patent Document 1 proposes a sandwich structure having a thermosetting resin foam as a core, and this structure is considered to be useful as an architectural material having lightweight and high stiffness. Patent Document 2 proposes an automobile panel comprising a sandwich panel and a stiffener. Patent Document 3 proposes a housing for an electric or electronic apparatus obtained by forming a multi-layer sandwich sheet.

However, in case of these sandwich structures, it is difficult to satisfy both thinness and lightweight, and there is a limit for mass-producing a thin-walled complicatedly shaped article. The sandwich structure of Patent Document 1 cannot be used for forming a complicatedly shaped article, since it is a formed plate. The automobile panel of Patent Document 2 can have a certain shape by bonding a stiffener, but is limited in application to large molded articles, being not suitable for mass-producing a thin-walled complicatedly shaped article.

The thinness of a sandwich structure is greatly affected by the thickness of its core. However, in an ordinary sandwich structure, its core component usually has a certain thickness for enhancing the effect of improving stiffness, and any core component satisfying both lightweight and thinness and having excellent practicality has not been proposed. In case of known conventional core components such as a balsa core, honeycomb core and urethane foam core, it is not easy to produce a thin core, and even if a thin core can be produced, those materials have such problems that when they are formed into preforms, they are likely to be broken, and that they cannot endure the deformation needed for forming, to present a limit to thinning.

Patent Document 3 proposes an electronic apparatus housing having a sandwich structure in which a nonwoven fibrous sheet impregnated with hollow particles and a resin later solidified is used as its core component. In the sandwich structure, the core portion has a packed structure impregnated with a resin later solidified. So, it is insufficient in lightweight. Further, because of batch production, the technique is economically disadvantageous and is not suitable for mass production or for producing a complicatedly shaped article. A complicatedly shaped member has, for example, a hinge portion provided on an erected wall portion, a boss or rib portion, etc., and it is realistically difficult to form these portions with the structure.

On the other hand, the applications of FRP include  housings of electric and electronic apparatuses such as personal computers, office automation apparatuses, audiovisual apparatuses, cell phones, telephone sets, facsimiles, household electric appliances and toys. These applications require mass productivity, moldability, productivity and economic efficiency, and in recent years, additionally, thinness and lightweight. To meet these requirements, magnesium alloys excellent in thinness and stiffness are used, but since metallic materials have large specific gravities, they are not quite satisfactory in view of lightweight. Patent Document 4 proposes an electronic apparatus housing obtained by integrating a planar FRP member and a thermoplastic member, which assures mass productivity and is excellent in thinness, stiffness and lightweight. It is anticipated that electronic apparatuses such as notebook-type personal computers, telephone sets and information terminals will be increasingly made portable and that aged users will further increase in future. So, it is highly demanded that these electronic apparatus housings are further reduced in weight.

Patent Document 1: JP 5-138797 A, page 2, line 1
Patent Document 2: JP 2002-284038 A, page 2, line 1

Patent Document 3: JP 5-42620 A, page 2, line 1
Patent Document 4: JP 2004-140255 A, page 2, line 1

JP 11 300870 A discloses a sandwich board made of fiber reinforced plastic (FRP), which has a core material layer and a surface material layer wherein a carbon fiber reinforcing material is impregnated with a resin and the individual area of a flaw part calculated by a non-destructive test method is below 5% of the area of the sandwich board and the sum total area of the flaw parts is below 50% of the area of the sandwich board.

JP 7 112501 A discloses a composite laminated structural body having a heat insulating layer, e.g. of polypropylene resin, between a laminated body and a resin foam in a molded article.

JP 2003 080648 discloses a method for producing polypropylene laminate. In the method, an unoriented polypropylene film and a foamed or filler sheet formed mainly from polypropylene are heat-laminated through an intermediate layer containing an acid-modified polypropylene resin having an acid value of 10-150 mgKOH/g and a weight average molecular weight of 5,000-200,000.

EP 0 259 121 A2 discloses a composite material having a laminate structure which may comprise one porous fiber layer constructed of reinforcing short fibres which are distributed in random directions and combined with each other mainly at intersections thereof by carbonized binder, and two fibre reinforced plastic layers comprising reinforcing fibres and a matrix resin.

EP 1 072 396 A2 discloses a sandwich structure including a core formed of a closed-cell foam plastic material, and surface plates formed of a fiber-reinforced composite material containing hydrophobic inorganic fibers as reinforcing fibres and bonded to the opposite surfaces of the core. Moreover, a method for repairing the sandwich structure is disclosed.

JP 10 316 771 discloses a sheet material for composite-fiber-reinforced molding and molding made therefreom. The material is obtained by making resin-coated chopped strands, scattering the strands over a travelling conveyor to form a mat and hot-pressing the mat.

DISCLOSURE OF THE INVENTION

Problems to Be Solved by the Invention

An object of the invention is to provide a sandwich structure excellent in lightweight and thinness in view of the above-mentioned prior art. Another object of the invention is to integrate the sandwich structure with another member, for providing an integrally formed article that can be mass-produced and is excellent in lightweight and thinness. A further other object of the invention is to provide a method for producing the sandwich structure of the invention and to provide a method for producing the integrally formed article of the invention.

Means for Solving the Problems

A sandwich structure of the invention is a sandwich structure (III) comprising a core component (I) and one each fiber reinforced component (II) composed of continuous reinforcing fibers (A) and a matrix resin (B) and disposed on both surfaces of the core component (I), in which the core component (I) has voids, a thickness of 0.1 to 1.5 mm and a specific gravity of 0.01 to 1.2; and the adhesive strength between the core component (I) and the fiber reinforced component (II) measured according to ASTM D 3846 is 1 MPa or more.

In the sandwich structure of the invention, it is preferred that the core component (I) comprises a foamed body having closed cells.

In the sandwich structure of the invention, it is preferred that the core component (I) is formed of a polyolefin resin.

In the sandwich structure of the invention, it is preferred that a modified polyolefin resin layer is disposed between a layer of the core component (I) and a layer of the fiber reinforced component (II).

In the sandwich structure of the invention, it is preferred that the melt viscosity of the modified polyolefin resin measured at 160°C is 10 to 500 Pa·s.

In the sandwich structure of the invention, it is preferred that the modified polyolefin resin contains 20 wt% or more of an acid-modified polyolefin resin that has an acid value of 10 or more.

In the sandwich structure of the invention, it is preferred that the modified polyolefin resin is impregnated into bundles of the reinforcing fibers used in the fiber reinforced components (II), and that the maximum impregnation length of the modified polyolefin resin is 10 $\mu$m or more.

Another mode of a sandwich structure of the invention is a sandwich structure (III) comprising a core component (I) and one each fiber reinforced component (II) composed of continuous reinforcing fibers (A) and a matrix resin (B) and disposed on both surfaces of the core component (I), in which the core component (I) is composed of discontinuous reinforcing fibers and a thermoplastic resin; filaments of the discontinuous reinforcing fibers cross each other to form a void structure; the thermoplastic resin is disposed at crossing portions of the discontinuous reinforcing fibers; and the core component (I) has a thickness of 0.1 to 1.5 mm and a specific gravity of 0.1 to 1.0.

In the sandwich structure of the invention, it is preferred that the crossing portions of filaments in the core component (I) deposited with the thermoplastic resin account for 50% or more of all the crossing portions.

In the sandwich structure of the invention, it is preferred that the thermoplastic resin has a melting point or a load deflection temperature of 160°C or higher.

In the sandwich structure of the invention, it is preferred that a thermoplastic resin layer is disposed between a layer of the core component (I) and a layer of the fiber reinforced component (II); and a thermoplastic resin constituting the thermoplastic resin layer has a melting point or a load deflection temperature of 160°C or lower.

In the sandwich structure of the invention, it is preferred that the thermoplastic resin constituting the thermoplastic resin layer is impregnated into bundles of the reinforcing fibers used in the fiber reinforced components (II), and that the maximum impregnation length of the thermoplastic resin is 10 $\mu$m or more.

In the sandwich structure of the invention, it is preferred that the reinforcing fibers (A) are carbon fibers.

In the sandwich structure of the invention, it is preferred that the matrix resin (B) is a thermosetting resin.

An integrally formed article of the invention, in which a sandwich structure (III) of the invention as a first member and another structural member as a second member are bonded to each other; the first member has a planar form; and the second member has its shape changed in the thickness direction.

In the integrally formed article of the invention, it is preferred that the first member and the second member are bonded to each other through an adhesive layer.

In the integrally formed article of the invention, it is preferred that the adhesive layer is formed of a thermoplastic resin.

In the integrally formed article of the invention, it is preferred that the adhesive layer is bonded to the fiber reinforced component (II), and that the thermoplastic resin constituting the adhesive layer and the matrix resin (B) used in the fiber reinforced component (II) are bonded to each other with ruggedness formed at the joint interface.

In the integrally formed article of the invention, it is preferred that the thermoplastic resin constituting the adhesive layer is impregnated into bundles of the reinforcing fibers used in the fiber reinforced component (II), and that the maximum impregnation length is 10 $\mu$m or more.

In the integrally formed article of the invention, it is preferred that the second member is a member made of a thermoplastic resin composition.

The integrally formed article of the invention can be preferably used as a part, member or housing of an electric or electronic apparatus.

A method for producing a sandwich structure of the invention, for producing the sandwich structure of the invention, comprises the lamination step of disposing one each thermally  adhesive substrate (m) formed of a thermoplastic resin on both surfaces of a core component (I) and laminating and disposing one each prepreg component obtained by impregnating a thermosetting resin as a matrix resin (B) into bundles of continuous reinforcing fibers (A), onto the thermally adhesive substrates (m), and the molding step of disposing a laminate obtained by the lamination step into a mold and letting heat and pressure act for molding, wherein the thermoplastic resin of the thermally adhesive substrates (m) is impregnated into the bundles of the reinforcing fibers during curing reaction of the thermosetting resin or during preheating before curing reaction in the molding step.

In the method for producing a sandwich structure of the invention, it is preferred that the step of disposing a thermally adhesive substrate (n) formed of a thermoplastic resin further on a surface of a laminate obtained by the lamination step is undergone; subsequently the laminate covered with the thermally adhesive substrate (n) is supplied to the molding step; and the thermoplastic resin of the thermally adhesive substrate (n) is impregnated into the bundles of the reinforcing fibers during the curing reaction of the thermosetting resin or during preheating before the curing reaction.

A method for producing an integrally formed article of the invention, for producing the integrally formed article of the invention, is characterized in that a sandwich structure (III) of the invention as a first member and another structural member as a second member are bonded to each other by at least one  integration method selected from the group consisting of thermal welding, vibration welding, ultrasonic welding, laser welding, insert injection molding, and outsert injection molding.

Effects of the Invention

The sandwich structure of the invention has excellent mechanical properties, lightweight and thinness based on its characteristic structure. The method for producing the sandwich structure of the invention has excellent mass productivity, and the production can be performed very economically compared with the conventional production. The integrally formed article having the sandwich structure of the invention can be suitably used as a part, member or housing of an electric or electronic apparatus such as a notebook-type personal computer.

Brief Description of the Drawings

Fig. 1 is an exploded perspective view showing an example of the integrally formed article of the invention.

Fig. 2 is an exploded perspective view showing an example of the sandwich structure of the invention.

Fig. 3 is a sectional view showing a joint portion for explaining a bonded state between a core component and a fiber reinforced component in an example of the sandwich structure of the invention.

Fig. 4 is a plan view for explaining a structure of an example of a core component in another example of the sandwich structure of the invention.

Fig. 5 is a sectional view showing a joint portion for explaining a bonded state between a first member and a second member in an example of the integrally formed article of the invention.

Fig. 6 is a sectional view showing an observation result of a bonded state between a first member and a second member in an example of the integrally formed article of the invention.

Fig. 7 is a sectional view showing another observation result of a bonded state between a first member and a second member in an example of the integrally formed article of the invention.

Fig. 8 is a perspective view showing a specimen used for observing a bonded state between a first member and a second member in an example of the integrally formed article of the invention.

Fig. 9 is a perspective view showing a specimen used for measuring a bonded state between a core component and a fiber reinforced component in an example of the sandwich structure of the invention.

Fig. 10 is a perspective view showing a specimen used for measuring a bonded state between a first member and a second member in an example of the integrally formed article of the invention.

Fig. 11 is an SEM photograph showing a surface of a core component produced in an example corresponding to a typical view for explaining the structure of the core component shown in Fig. 4.

Fig. 12 is an SEM photograph showing a surface of a core component produced in another example corresponding to a typical view for explaining the structure of the core component shown in Fig. 4.

Meanings of Symbols

| | |
|---|---|
| 1 | first member |
| 2 | second member |
| 3 | integrally formed article |
| 4 | boss portion |
| 5 | hinge portion |
| 6 | core component |
| 7 | fiber reinforced component |
| 8 | sandwich structure |
| 11 | core component |
| 12 | fiber reinforced component |
| 13 | joint interface |
| 14 | modified polyolefin resin layer |
| 15, 15a | reinforcing fiber |
| 16 | matrix resin |
| 17 | boundary interface |
| 18 | impregnation length |
| 19 | outside line |
| 20 | maximum impregnation position |
| 41 | reinforcing fiber |
| 42 | crossing portion |
| 43 | thermoplastic resin |
| 44 | network structure |
| 51 | first member |
| 52 | second member |
| 53 | joint interface |
| 54 | adhesive layer |
| 55, 55a | reinforcing fiber |

| | |
|---|---|
| 56 | top of the resin forming the adhesive layer |
| 57 | the largest thickness of the resin |
| 58 | the largest thickness of the adhesive layer |
| 58a | outside line |
| 59 | matrix resin |
| 61 | first member |
| 62 | second member |
| 63 | adhesive layer |
| 64 | reinforcing fiber group |
| 64a, 64b | reinforcing fiber |
| 65 | matrix resin |
| 66 | boundary interface |
| 71 | first member |
| 72 | second member |
| 73 | adhesive layer |
| 74 | matrix resin |
| 75 | reinforcing fiber group |
| 75a, 75b | reinforcing fiber |
| 76 | boundary interface |
| 77 | void |
| 81 | second member |
| 82 | joint portion |
| 83 | remaining material |
| 91 | specimen |
| 92 | core component |
| 93 | fiber reinforced component |
| 94a, 94b | notch |
| 101 | specimen |
| 102 | first member |
| 103 | second member |

The Best Modes for Carrying Out the Invention

A sandwich structure of the invention and an integrally formed article comprising the sandwich structure are described below in reference to embodiments.

A first embodiment of the sandwich structure of the invention:

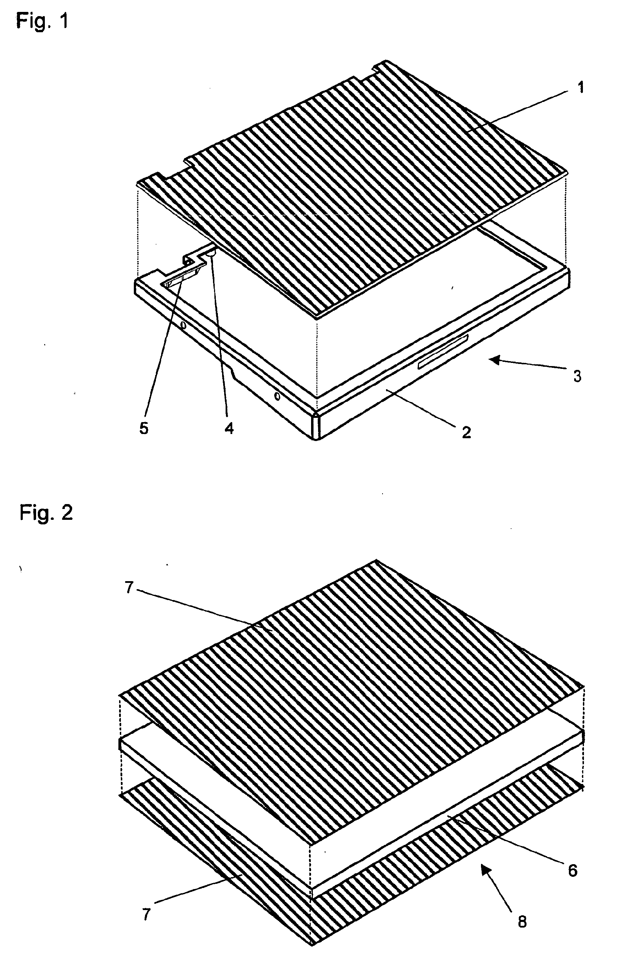

Fig. 1 is a perspective view showing an example of the integrally formed article of the invention in which an example of the sandwich structure of the invention is used as a first member. In Fig. 1, the integrally formed article 3 is illustrated in an exploded manner. The integrally formed article 3 of Fig. 1 is intended to show a housing of a notebook-type personal computer comprising a first member (top plate) 1 and a second member (frame) 2 having a boss portion 4 and a hinge portion 5.

Fig. 2 is a perspective view showing an example of the sandwich structure (III) of the invention. In Fig. 2, the sandwich structure 8 of the invention is illustrated in an exploded manner. In Fig. 2, the sandwich structure (III) 8 of the invention comprises a core component (I) 6 and fiber reinforced components (II) 7 each of which is disposed respectively on both surfaces of the core component (I) 6. Each of the fiber reinforced components (II) 7 is composed of continuous reinforcing fibers (A) and a matrix resin (B). The core component (I) 6 and the fiber reinforced components (II) 7 are bonded to each other to form the sandwich structure (III) 8.

For reducing the weight of the sandwich structure 8, the specific gravity of the core component 6 is selected in a range from 0.01 to 1.2. It is preferred that the specific gravity of the core component 6 is 0.1 to 0.8. A more preferred range is 0.1 to 0.5.

In order that the sandwich structure 8 can be satisfactory in both stiffness and lightweight, it is important that the specific gravity of the core component 6 is lower than that of the fiber reinforced components 7. If the specific gravity of the core component 6 is smaller, a higher lightweight effect can be obtained. If the specific gravity of the core component 6 is more than 1.2, the sandwich structure 8 may not have sufficient lightweight.

To make the sandwich structure 8 satisfactorily thinner, the thickness of the core component 6 is selected in a range from 0.1 to 1.5 mm. It is preferred that the thickness of the core component 6 is 0.1 to 1.0 mm. A more preferred range is 0.1 to 0.8 mm.

To satisfy the value of specific gravity, it is preferred that the core component 6 is formed of a foamed body. It is more preferred that cells existing in the foamed body are closed cells. It is preferred that the foamed body is a sheet.

One of the features of the sandwich structure 8 of the invention is that it is thin. In the case where the sandwich structure 8 is produced by an inexpensive molding method such as press molding, if the core component 6 is formed of a foamed body having closed cells, the strain during the pressurization for producing the sandwich structure 8 can be reduced. If the core component 6 is formed of a sheet of a foamed body, the thickness of the core component 6 can be kept uniform. These constitutions can enhance the productivity of the sandwich structure 8.

It is preferred that the material forming the core component 6 is a thermosetting resin selected from the group of the thermosetting resins enumerated later or a thermoplastic resin selected from the group of the thermoplastic resins enumerated later.

For accurately controlling the thickness of the core component 6 thinly, it is preferred that the core component 6 is made of a thermoplastic resin. Above all, a polyolefin resin can be preferably used in view of the lightweight as a foamed body, since the material per se is low in specific gravity.

In the case where a polyolefin resin is used, it is preferred that the process temperature for producing the sandwich structure 8 by molding is 160°C or lower. More preferred is 155°C or lower.

Further, in the case where a polyolefin resin is used, it is preferred that a modified polyolefin resin is disposed between a layer of the core component (I) and layers of the fiber reinforced components (II) for the purpose of enhancing the adhesion between the core component (I) 6 and the fiber reinforced components (skin members) (II) 7 disposed on both surfaces of the core component (I) 6. Especially it is further preferred that the modified polyolefin resin can be melted to flow at least at 160°C for obtaining the preferred bonding style between the core component (I) and the fiber reinforced components (II) described later. It is preferred that the melt viscosity in this case is 10 to 500 Pa·s. A more preferred range is 50 to 300 Pa·s. The method for measuring the melt viscosity is not especially limited, and a particular example of the measuring method is described later for the examples.

It is preferred in view of higher adhesion that the number of functional groups of the modified polyolefin resin due to modification is larger. The method for modifying the polyolefin resin is not especially limited, and a graft reaction of a functional group-containing compound, addition reaction to ends, copolymerization of a functional group-containing block, etc. can be exemplified. Above all, for increasing functional groups, a modification technique by a graft reaction of a functional group-containing compound having a double bond to an unsaturated polyolefin is more preferred.

Preferred examples of the functional groups are carboxyl groups, acid anhydride groups, hydroxyl groups, epoxy groups and amino groups. Meanwhile, the number of functional groups can be confirmed using an acid value, OH value, epoxy value, amine value or the like as an indicator. Among modified polyolefin resins, an acid-modified polyolefin resin is especially preferred in view of handling convenience and modification easiness.

The modified polyolefin resin can be used as a mixture with a non-modified polyolefin resin. In view of handling convenience, it is preferred that the mixed amount of the acid-modified polyolefin resin is 20 wt% or more. A more preferred range is 30 to 70 wt%. In this case, it is preferred that the acid value of the acid-modified polyolefin resin is 10 or more. More preferred is 20 or more, and especially preferred is 30 or more.

As a first embodiment of the sandwich structure of the invention, the adhesive strength between the core component (I) and the fiber reinforced components (II) of the sandwich structure measured according to ASTM D 3846 is 1 MPa or more. Preferred is 2 MPa or more, and more preferred is 3 MPa or more. Meanwhile, in this measurement, in the case where delamination does not occur between the core component (I) and the fiber reinforced components (II) and where the core component (I) is broken, the adhesive strength is judged to be higher than the breaking strength. If the adhesive strength is less than 1 MPa, delamination may occur between the core component (I) and the fiber reinforced components (II) when the sandwich structure (III) is processed, transported or integrated with the other member.

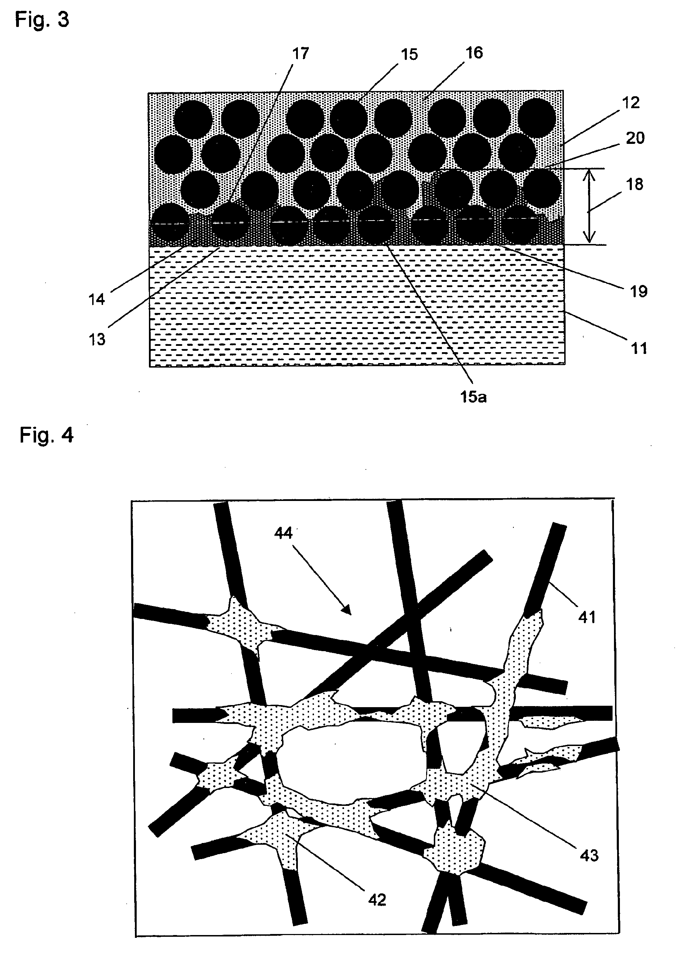

A preferred bonding style between the core component and the fiber reinforced components (II) is described in reference to Fig. 3. Fig. 3 is an expanded sectional view showing a portion of a joint interface formed when one of the fiber reinforced components (II) is bonded to one surface (top surface) of the core component (I) of the sandwich structure (III).

In Fig. 3, the fiber reinforced component (skin member) 12 is bonded to the top surface of the core component 11 by adhesion, to form a joint interface 13. The adhesion is achieved by a modified polyolefin resin layer 14 disposed between the layer of the core component 11 and the layer of the fiber reinforced component 12. The modified polyolefin resin forming the modified polyolefin resin layer 14 impregnates into the clearances formed among the numerous continuous reinforcing fibers (A) 15 located in the fiber reinforced component 12.

In the case where a thermosetting resin (for example, an epoxy resin) is used as the matrix resin (B) 16 used in the fiber reinforced component 12, the bonding style is preferred to be such that ruggedness is formed at the boundary interface 17 between the modified polyolefin resin layer 14 and the matrix resin 16, and that many reinforcing fibers 15a among the numerous continuous reinforcing fibers 15 are embedded in the adhesive layer formed as the modified polyolefin resin layer 14, in view of achieving a higher adhesive strength.

As for the impregnation state of the modified polyolefin resin of the modified polyolefin resin layer 14 into among the reinforcing fibers 15a, it is preferred in view of adhesive strength that the maximum impregnation length 18, i.e., the distance 18 between the outside line 19 of the reinforcing fibers 15a and the maximum impregnation position 20 is 10 μm or more. More preferred is 15 μm or more. The method for measuring the maximum impregnation length 18 is not especially limited, and the same methods as those for confirming the bond structure of the integrally formed article described later can be used. Particular methods are exemplified in the following examples.

A second embodiment of the sandwich structure of the invention:

Another embodiment different from the first embodiment for reducing the weight of the sandwich structure (III) 8 shown in Fig. 2 is described below. In this embodiment, the core component (I) 6 comprises numerous discontinuous reinforcing fibers and a thermoplastic resin. In the core component 6, a configuration (network structure) is formed by which the numerous reinforcing fibers are located to cross each other for forming a void structure, and the thermoplastic resin of the core component 6 is disposed at crossing portions where the reinforcing fibers cross each other.

Fig. 4 is a typical view for explaining an example of the network structure. In Fig. 4, at the crossing portions 42 of the reinforcing fibers 41, the thermoplastic resin 43 is deposited, and the reinforcing fibers 41 located at the crossing portions 42 are fastened to each other by the thermoplastic resin 43, to form the network structure 44. The fastening means a state where the thermoplastic resin 43 is deposited to simultaneously cover the surfaces of two or more reinforcing fibers 41 located at the crossing portion 42 formed with the two or more reinforcing fibers (filaments) 41.

In the case where the thermoplastic resin 43 is not disposed at the crossing portions 42 of the reinforcing fibers 41, when the core component 6 is assembled to form the sandwich structure 8, the pressure of press molding or the like may act to destroy the core component 6 per se, for impairing the thickness uniformity of the core component 6. The crossing portions 42 can be fastened, for example, by a method of heating and melting the thermoplastic resin for welding or a method of applying or spraying a thermoplastic resin solution and removing the solvent, etc. Above all, in view of process simplicity, the welding method can be preferably used.

Strengthening the network structure 44 is preferred in view of lightweight, since the core component 6 can be formed by using smaller amounts of the reinforcing fibers 41 and the thermoplastic resin 43. Therefore, in the core component (I), it is preferred that the crossing portions of the reinforcing fibers (A) deposited with the thermoplastic resin account for 50% or more of all the crossing portions. More preferred is 70% or more, and especially preferred is 90% or more. This rate can be confirmed by visually observing more than 100 crossing portions in the region selected at random from the core component (I) using a microscope.

For reducing the weight of the sandwich structure (III) 8 of the second embodiment, the specific gravity of the core component (I) 6 is selected in a range from 0.01 to 1.0. It is preferred that the specific gravity of the core component (I) 6 is 0.1 to 0.8, and a more preferred range is 0.1 to 0.5. Further, for satisfactorily thinning the sandwich structure (III) 8, the thickness of the core component (I) 6 is selected in a range from 0.1 to 1.5 mm. It is preferred that the thickness of the core component (1) 6 is 0.1 to 1.0 mm, and a more preferred range is 0.1 to 0.8. An especially preferred range is 0.1 to 0.5 mm. If the specific gravity of the core component (I) 6 is more than 1.0 and the thickness of the core component (I) 6 is more than 1.5 mm, then the intended lightweight and thinness of the sandwich structure may not be achieved.

As the discontinuous reinforcing fibers 41 used in the core component (I), reinforcing fibers of the type selected from the group of types of reinforcing fibers described later can be used. Especially in view of forming a strong network structure, it is preferred to use carbon fibers excellent in specific strength and specific stiffness. As required, organic fibers, natural fibers, basalt fibers, etc. can be mixed.

The fiber length of the discontinuous reinforcing fibers 41 is not especially limited, and those obtained by cutting continuous reinforcing fibers at a predetermined length can be used. It is preferred for the formation of the network structure that the aspect ratio (ratio of fiber length/fiber diameter) of the discontinuous reinforcing fibers 41 is larger, but such discontinuous reinforcing fibers are not suitable in view of handling convenience. So, generally, discontinuous reinforcing fibers having a fiber length of 2 to 50 mm can be preferably used. In view of processability, it is more preferred that the fiber length is 3 to 30 mm. It is preferred that the aspect ratio of the discontinuous reinforcing fibers 41 is 200 to 50,000. A more preferred range is 400 to 20,000, and a further more preferred range is 700 to 10,000.

The network structure 44 in the core component (I) has a function of forming numerous voids in the core component (I). As a result, the weight of the core component (I) is reduced. It is preferred that the volume rate of the voids (void rate) is 20 to 80 vol% in view of the balance between lightweight and strength of the core component (I). A more preferred range is 25 to 70 vol%.

The void rate is calculated using the volume Vc (cm$^3$) and weight Wc (g) of the core component, the weight Wf (g) and density pf (g/cm$^3$) of the reinforcing fibers forming the core component, and the weight Wp (g) and density pp (g/cm$^3$) of the thermoplastic resin, from the following formula:

$$Void\ rate = [1 - (Vf + Vp)/Vc]\ x\ 100$$

where the volume of the reinforcing fibers, Vf = Wf/pf, and the volume of the thermoplastic resin, Vp = Wp/pp.

The weight percentage of the reinforcing fibers 41 used in the core component (I) is not especially limited. However, it is preferred that the weight percentage of the reinforcing fibers 41 is 10 to 80 wt%, and a more preferred range is 30 to 60 wt%.

As the thermoplastic resin 43 used in the core component (I), a thermoplastic resin selected from the group of thermoplastic resins enumerated later can be used. Especially in the case where the sandwich structure (III) is produced by press molding, it is preferred in view of the thickness uniformity achieved by heating and pressurization that the melting point or load deflection temperature of the thermoplastic resin 43 is 160°C or higher. More preferred is 180°C or higher. An especially preferred thermoplastic resin 43 is a polyamide resin.

Further, for the purpose of protecting the void structure of the core component (I), it is preferred that the sandwich structure (III) of the invention has one each thermoplastic resin layer disposed between the layer of the core component (I) and the layers of the fiber reinforced components (II). Furthermore, for the purpose of preventing that the matrix resin (B) used in the fiber reinforced components (II) flows into the void structure of the core component (I), it is more preferred that the thermoplastic resin layers are formed as layers continuous in the face direction.

In the second embodiment of the sandwich structure (III) of the invention, as in the first embodiment, for the purpose of enhancing the adhesion between the core member (I) and the fiber reinforced components (II), it is preferred that the melting point or load deflection temperature of the thermoplastic resin constituting the thermoplastic resin layers is 160°C or lower. More preferred is 150°C or lower.

In the second embodiment of the sandwich structure (III) of the invention, as in the first embodiment, it is preferred that the adhesive strength between the core component (I) and the fiber reinforced components (II) of the sandwich structure (III) measured according to ASTM D 3846 is 1 MPa or more. More preferred is 2 MPa or more.

A more preferred bonding style between the core component (I) and the fiber reinforced components (II) in the second embodiment of the sandwich structure (III) of the invention is, as in the first embodiment, a structure in which the thermoplastic resin forming the thermoplastic resin layers between the layer of the core component (I) and the layers of the fiber reinforced components (II) is impregnated into the clearances formed among numerous reinforcing fibers used in the fiber reinforced components (II). It is preferred that the maximum impregnation length of the thermoplastic resin is 10 μm or more. More preferred is 15 μm or more. In this case, the thermoplastic resin may impregnate also into the network structure to such an extent that the void structure of the core component (I) is not impaired.

In the first and second embodiments of the sandwich structure (III) of the invention, the fiber reinforced components (II) forming the skin portions of the sandwich structure (III) comprise continuous reinforcing fibers (A) and a matrix resin (B). The continuous reinforcing fibers mean numerous filaments continuous for a length of 10 mm or more at least in one direction. It is not necessary that all the filaments are continuous in the overall widths of the fiber reinforced components (II), and some filaments may also be cut halfway.

As the reinforcing fibers (A) used in the fiber reinforced components (II), reinforcing fibers of the type selected from the group of types of reinforcing fibers described later. Above all, it is preferred in view of the mechanical properties of the sandwich structure (III) to use carbon fibers excellent in specific gravity and specific stiffness. Examples of the mode of the reinforcing fibers (A) include filament bundles respectively comprising numerous filaments, cloth composed of the filament bundles, unidirectional filament bundles in which numerous filaments are arranged in one direction, and unidirectional cloth composed of the unidirectional filament bundles. Especially in view of mechanical properties, design and productivity, cloth or unidirectional filament bundles are preferred. The reinforcing fibers (A) may be composed of plural filament bundles of the same mode or may be composed of plural filament bundles of different modes.

A group of types of the reinforcing fibers (A) used in the sandwich structure (III) of the invention is enumerated below: metallic fibers such as aluminum fibers, brass fibers and stainless fibers, glass fibers, carbon fibers such as polyacrylonitrile carbon fibers, rayon carbon fibers, lignin carbon fibers and pitch carbon fibers, graphite fibers, organic fibers such as aromatic polyamide fibers, polyaramide fibers, PBO fibers, polyphenylene sulfide fibers, polyester fibers, acrylic fibers, nylon fibers and polyethylene fibers, silicon carbide fibers, silicon nitride fibers, alumina fibers, boron fibers, etc. Any one type of these fibers can be used or two or more types of these fibers can also be used together. These materials of fibers can also be treated on the surfaces. Examples of the surface treatment include metal covering treatment, treatment using a coupling agent, treatment using a sizing agent, additive deposition treatment, etc.

As the matrix resin (B) of the fiber reinforced components (II), a thermosetting resin selected from the group of thermosetting resins enumerated later or a thermoplastic resin selected the group of thermoplastic resins enumerated later can be used. Especially in view of such properties as stiffness, strength and heat resistance of the sandwich structure (III) and the handling convenience of the prepreg used as a material to be molded, it is preferred to use a thermosetting resin. Among them, an epoxy resin is more preferred. Further, it is preferred to mix a flame retarder with the matrix resin (B), since the flame retardancy needed for application to electric and electronic apparatuses can be imparted.

A group of thermosetting resins used in the sandwich structure (III) of the invention is enumerated below. Unsaturated polyester resins, vinyl ester resins, epoxy resins, phenol (resol type) resins, urea melamine resins, polyimide resins, etc. can be preferably used. Their copolymers, modification products, and/or blend resins consisting of two or more of the foregoing can also be used. Among them, an epoxy resin is especially preferred in view of the mechanical properties and heat resistance of the formed article. It is preferred that an epoxy resin is contained as a main component of the resin used, for exhibiting its excellent mechanical properties. It is particularly preferred that the resin composition used contains 60 wt% or more of an epoxy resin.

A group of thermoplastic resins used in the sandwich structure (III) of the invention is enumerated below: polyester resins such as polyethylene terephthalate (PET) resin, polybutylene terephthalate (PBT) resin, polytrimethylene terephthalate (PTT) resin, polyethylene naphthalate (PENp) resin and liquid crystal polyesters, polyolefin resins such as polyethylene (PE) resin, polypropylene (PP) resin and polybutylene resin, styrene resins, urethane resins, polyoxymethylene (POM) resins, polyamide (PA) resins, polycarbonate (PC) resins, polymethyl methacrylate (PMMA) resin, polyvinyl chloride (PVC) resin, polyphenylene sulfide (PPS) resin, polyphenylene ether (PPE) resins, modified PPE resins, polyimide (PI) resins, polyamideimide (PAI) resins, polyetherimide (PEI) resins, polysulfone (PSU) resins, modified PSU resins, polyethersulfone (PES) resins, polyketone (PK) resins, polyetherketone (PEK) resins, polyetheretherketone (PEEK) resins, polyetherketoneketone(PEKK) resins, polyallylate (PAR) resins, polyethernitrile (PEN) resins, phenol resins, phenoxy resins, fluorine resins such as polytetrafluoroethylene, their copolymers, modification products, blend resins consisting of two or more of the foregoing, etc. Above all, in view of heat resistance and chemicals resistance, PPS resin can be more preferably used. In view of the appearance and dimensional stability of the formed article, polycarbonate resins and styrene resins can be more preferably used. In view of the strength and impact resistance of the formed article, polyamide resins can be more preferably used.

Any one of the thermosetting resins and the thermoplastic resins enumerated in the above groups can contain an impact resistance improving agent, filler and other additives used as ingredients of elastomers and rubbers to such an extent that the object of the invention is not impaired. Examples of them include an inorganic filler, flame retarder, conductivity additive, crystal nucleating agent, ultraviolet light absorber, antioxidant, damping material, antimicrobial agent, insecticide, deodorant, coloration preventive, thermal stabilizer, releasing agent, antistatic agent, plasticizer, slip agent, colorant, pigment, dye, foaming agent, foam stabilizer and coupling agent.

It is preferred in view of applicability to the intended use of the invention that the thickness of the sandwich structure (III) of the invention is 0.2 to 4 mm as substantial thickness. A more preferred range is 0.2 to 2 mm, and an especially preferred range is 0.2 to 1 mm. The substantial thickness means the thickness representing the sandwich structure (III), and means the thickness of the region occupying at least 40% of the projected area of the sandwich structure, not including intentionally added portions such as rib portions, projected portions, depressed portions and protruded portions. In the case where the sandwich structure (III) has gentle ups and downs, the thickness of the portion occupying the maximum area should be employed as the substantial thickness, and in the case where there are two or more substantial thicknesses, the largest thickness should be employed as the substantial thickness.

In the sandwich structure (III) of the invention, it is preferred that the bending modulus of elasticity of the flat portion having the substantial thickness based on ISO 178 is 20 GPa or more. More preferred is 25 GPa or more.

The integrally formed article of the invention can be used as a material constituting a part of an electric or electronic apparatus, office automation apparatus, household electric appliance, medical appliance, automobile, building or the like. Considering these applications, it is preferred that the sandwich structure (III) has a bending modulus of elasticity of 20 GPa or more. If the bending modulus of elasticity is in this range, the integrally formed article can be made thinner. A particular method for measuring the bending modulus of elasticity of the sandwich structure (III) is described later for the examples.

As shown in Fig. 1, the integrally formed article 3 of the invention comprises the sandwich structure (III) as a first member 1 and a second member 2 bonded to the first member 1. For the purpose of obtaining an integrally formed article 3 satisfactory in both complicated shape and mass productivity, the sandwich structure (III) as the first member 1 has a planar form, and the second member 2 has its shape changed in the thickness direction. A planar form means that the majority portion of the projected area of the integrally formed article 3 has a flat form or a gently curved form, as typically shown in Fig. 1. For example, it may have a curved surface with a radius of curvature of within 1000 m. Plural such curved surfaces may be contained intermittently in one surface of the integrally formed article 3. Each surface of the integrally formed article 3 may also contain a contraction of area with a radius of curvature of 5 mm or more. A planar form may also be a generally three-dimensional form containing these complicated face forms.

On the other hand, the second member 2 is integrated with the first member 1, for the purpose of letting the integrally formed article 3 have a complicated shape. A complicated shape means a shape in which the thickness changes in the respective directions of length, width and height and includes structural mechanism portions, geometrical design form portions and intentionally formed protrusions, depressions, etc. They correspond to the frame portion, erected wall portion, hinge portion, boss rib portion, etc. as typically shown in the second member 2 of Fig. 1. It is preferred that the second member 2 is produced by a method relatively more excellent in mass productivity than that of the first member 1.

The material of the second member 2 is not especially limited. Preferably used is a publicly known material such as a thermosetting resin selected from the group of thermosetting resins enumerated before, a thermoplastic resin selected from the group of thermoplastic resins enumerated before, cement, concrete, any of these materials reinforced by fibers, wood, metallic material, or paper material. In view of moldability, a thermoplastic resin can be preferably used. For the purpose of enhancing mechanical properties, a fiber reinforced thermoplastic resin can be preferably used. For the purpose of further enhancing the mechanical properties of a formed article, though undesirable in view of lightweight, a metallic material can be preferably used. Especially preferred is a thermoplastic resin composition in which discontinuous reinforcing fibers are homogeneously dispersed in a thermoplastic resin, since all of mass productivity, moldability, light weight and mechanical properties can be satisfied. In this case, in view of the balance among moldability, strength and lightweight, it is preferred that if the reinforcing fibers are carbon fibers, the mixing rate of the reinforcing fibers is 5 to 75 wt% based on the weight of the thermoplastic resin composition. A more preferred range is 15 to 65 wt%.

In the invention, it is preferred that the first member 1 is a main member of the integrally formed article 3. It is preferred that the first member 1 occupies 50% or more of the projected area of the integrally formed article 3. It is more preferred that the first member 1 occupies 70% or more of the projected area.

In the integrally formed article 3 of the invention, when the first member 1 and the second member 2 are bonded to each other for integration, it is preferred that excellent adhesion exists between the members. Therefore, it is preferred that an adhesive layer intervenes at the joint interface between the first member 1 and the second member 2. As the adhesive layer, a well-known adhesive such as an acrylic adhesive, epoxy adhesive, styrene adhesive or the like can be used to form an adhesive layer independent of the first member and the second member. Further, for enhancing the productivity of integration, it is preferred to form a thermoplastic resin layer as the outermost layer of the first member.

Especially in the case where a thermosetting resin (for example, an epoxy resin) is used as the matrix resin (B) of the first member 1 and where a thermoplastic resin composition is applied as the second member 2, if a thermoplastic resin layer having good affinity to the thermoplastic resin composition constituting the second member 2 is formed as the outermost layer of the first member 1, the thermoplastic resins used at the joint interface between the first member 1 and the second member 2 can be thermally welded to each other. In this case, it is not necessary to form another adhesive layer at the joint interface.

If the adhesive layer formed as the outermost layer of the first member 1 is formed of the same material as that of the thermoplastic resin of the second member 2, the bonding strength can also be enhanced. The resin formed as the outermost layer of the first member 1 is not especially limited if it is compatible with, even not the same as, the thermoplastic resin constituting the second member 2, but it is preferred to select a resin most suitable for the thermoplastic resin constituting the second member 2.

In the fiber reinforced component (II) forming the surface to be bonded of the first member 1, in the case where a thermosetting resin (for example, an epoxy resin) is used as the matrix resin (B), it is preferred that the thermoplastic resin of the adhesive layer has a rugged form at the interface with the matrix resin (B), when it is bonded to the reinforced fiber component. Especially in the case where the bonding style is such that many reinforcing fibers among the continuous reinforcing fibers (A) are embedded in the adhesive layer formed of the thermoplastic resin, excellent adhesive strength can be obtained.

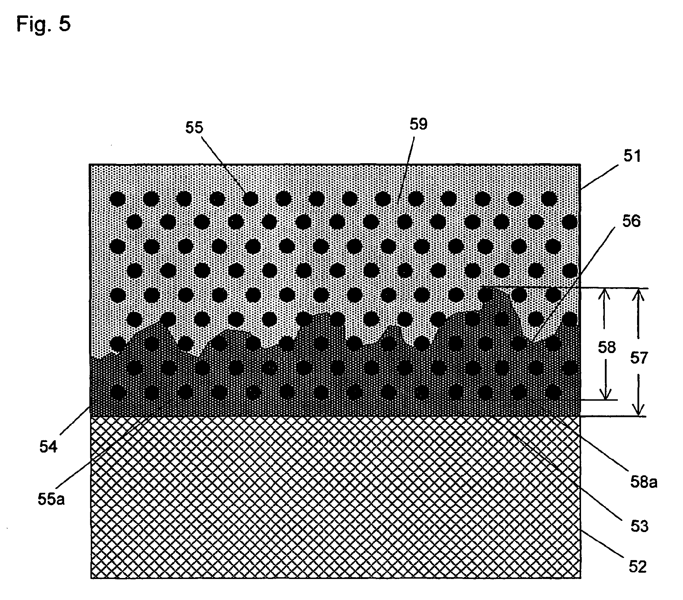

Fig. 5 is a sectional view showing the joint portion between the first member and the second member in the integrally formed article of the invention, for explaining an example of the bonding state between both the members. In Fig. 5, the sandwich structure (III) of the invention as a first member 51 and a second member 52 are bonded to each other at the joint interface 53. At the joint interface 53, there is an adhesive layer 54 formed of a resin. The resin forming the adhesive layer 54 penetrates into the clearances among the many reinforcing fibers 55a located near the joint interface 53 out of the numerous reinforcing fibers 55 of the first member 51. The first member 51 comprises the numerous reinforcing fibers 55 and a matrix resin 59.

The top portion 56 of the penetrating resin forming the adhesive layer 54 has a rugged form. It is preferred that the largest thickness 57 of the penetrating resin is 0.01 to 1,000 $\mu$m. A more preferred range is 0.1 to 200 $\mu$m, and a further more preferred range is 1 to 100 $\mu$m. The largest thickness 58 of the adhesive layer 54 containing the reinforcing fibers 55a refers to the distance in reference to the outside line 58a of the outermost (on the second member side) reinforcing fibers in contact with the resin of the adhesive layer 54. In view of adhesive strength, it is preferred that the largest thickness 58 is 1 to 80 $\mu$m.

The joint structure of the joint portion between the first member 1 or 51 and the second member 2 or 52 in the integrally formed article of the invention can be verified, for example, by the testing methods described below.

First testing method:

A section of the surface layer portion of the joint portion is observed using a scanning electron microscope (SEM) or transmission electron microscope (TEM). The observation of the section can be performed as required based on a photograph of the section. The specimen to be observed is a thin section prepared using a surface layer portion cut out of the member. When the section is prepared, it can happen that some reinforcing fibers of the reinforcing fiber group come off, but there is no problem, if they come off to such an extent that the observation is not affected. The specimen can also be stained as required for adjusting the contrast of observation.

The reinforcing fibers constituting the reinforcing fiber group observed are usually circular in sectional form. If a reinforcing fiber comes off, the remaining circular mark can be usually observed. In the portion other than the portion where the reinforcing fibers constituting the reinforcing fiber group are located, the matrix resin (B) layer and the thermoplastic resin layer can be observed as two regions different in contrast.

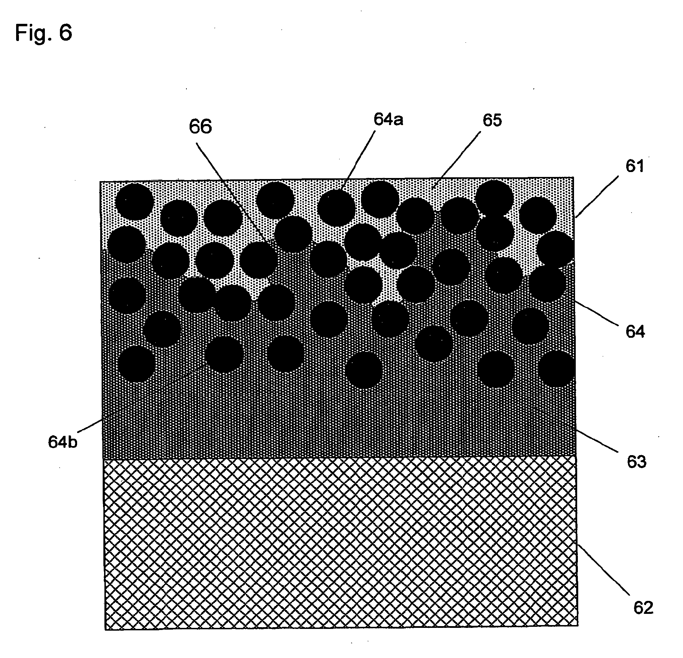

An example of the observation result by this first method is shown in Fig. 6. Fig. 6 shows an expanded section of the joint portion of an integrally formed article comprising a first member 61 and a second member 62. The drawing shows a state where the thermoplastic resin of the adhesive layer 63 penetrates into the clearances formed among the many reinforcing fibers 64a and 64b existing among the reinforcing fiber group 64 and also shows a state where the boundary interface 66 between the layer of the matrix resin (B) 65 and the adhesive layer 63 has a rugged form.

Second testing method:

A section in which the adhesive layer formed of a thermoplastic resin in the surface layer portion at the joint portion is extracted and removed by a solvent is observed using a scanning electron microscope (SEM) or transmission electron microscope (TEM). The observation of the section can be performed as required based on a photograph of the section. An about 10 mm long and about 10 mm wide specimen is obtained by cutting the member. The adhesive layer is sufficiently washed with a good solvent of the thermoplastic resin constituting the adhesive layer, to remove the thermoplastic resin, for preparing a specimen for observation. The section of the prepared specimen is observed using an SEM (or TEM).

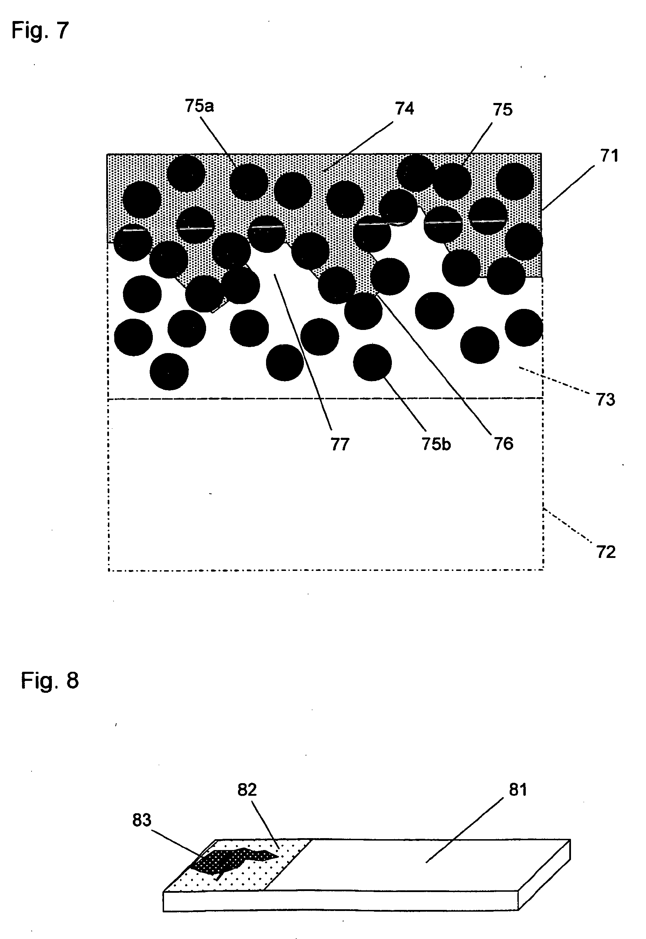

An example of the observation result by this second method is shown in Fig. 7. Fig. 7 is an expanded sectional view showing the joint interface of an integrally formed article comprising a first member 71 and a second member 72, from which the second member 72 and the adhesive layer 73 formed of a thermoplastic resin are removed. In Fig. 7, the matrix resin (B) 74 exists and contains the reinforcing fibers 75a existing among the reinforcing fiber group 75, but the thermoplastic resin layer (adhesive layer) 73 that had a rugged boundary interface 76 with the matrix resin (B) 74 does not exist, since it was removed by the solvent when the specimen was prepared. The rugged form of the boundary interface 76 can be observed, and the reinforcing fibers 75b existing among the reinforcing fiber group 75 can be observed in the location where the adhesive layer 73 used to exist. Among these reinforcing fibers, voids 77 can be observed. This proves that the reinforcing fibers 75b existing among the reinforcing fiber group 75 were embedded in the adhesive layer formed of the thermoplastic resin.

When the joint portion between the members is observed in an integrally formed article according to the first or second testing method, the joint portion can be treated, for example, by a method in which the joint portion is heated up to a temperature capable of plasticizing the thermoplastic resin of the adhesive layer, for being separated, or by a method in which the second member is mechanically removed.

Third testing method:

In an integrally formed article, one member is forcibly separated from the other member, to observe the separated state. In this testing method, the integrally formed article is forcibly separated at room temperature in such a manner as to destroy between the first member and the second member. The surface layer of the first member may partially remain to adhere to the separated second member. This remaining material is observed using a microscope.

An example showing the state of the specimen obtained by carrying out this third test method is shown in Fig. 8. In Fig. 8, the second member 81 shows a joint portion 82 to which the surface of the first member was bonded. Somewhere on the joint portion 82, it can be observed that the surface layer portion of the first member partially remains as a remaining material 83. It can be observed that plural reinforcing fibers coming off from the reinforcing fiber group located in the surface layer of the first member exist in the remaining material 83.

The bonding style of the integrally formed article of the invention can be verified by at least any one of the above-mentioned testing methods.

The method for producing the sandwich structure (III) of the invention is not especially limited. One method comprises the steps of disposing one each intermediate material (prepreg) comprising continuous reinforcing fibers (A) impregnated with a matrix resin (B) on both surfaces of a core component (I) and integrally molding them. Another method comprises the steps of injecting a liquid resin into an intermediate material (preform) comprising continuous reinforcing fibers (A) and a core component (I) and integrally molding them. A further other method comprises the steps of pre-molding fiber reinforced components (II) and a core component (I) and subsequently bonding them. As the method for producing the sandwich structure (III) of the invention, in view of productivity and precise thickness control of the sandwich structure (III), preferably used is a method comprising the step of heating and pressing a laminate comprising a prepreg and a core component (I) at a temperature not higher than the melting point of the core component (I) for integral molding. A production method more preferred in view of the adhesion and thickness uniformity of the sandwich structure is described below.

A method for producing a sandwich structure of the invention, comprises the lamination step of disposing one each thermally adhesive substrate (m) formed of a thermoplastic resin  on both surfaces of the core component (I) and laminating and disposing one each prepreg component obtained by impregnating a thermosetting resin as a matrix resin (B) into bundles of continuous reinforcing fibers (A), onto the thermally adhesive substrates (m), and the molding step of disposing a laminate obtained by the lamination step into a mold and letting heat and pressure act for molding, wherein the thermoplastic resin of the thermally adhesive substrates (m) is impregnated into the bundles of the reinforcing fibers during curing reaction of the thermosetting resin or during preheating before curing reaction in the molding step.

In the molding step, it is preferred that the process temperature is not higher than the melting point or load deflection temperature of the thermoplastic resin used in the core component (I).

A production method especially preferred in view of integrating the sandwich structure at high productivity is described below.

In the method for producing a sandwich structure of the invention, it is preferred that the step of disposing a thermally adhesive substrate (n) formed of a thermoplastic resin further on a surface of a laminate obtained by the lamination step is undergone; subsequently the laminate covered with the thermally adhesive substrate (n) is supplied to the molding step; and the thermoplastic resin of the thermally adhesive substrate (n) is impregnated into the bundles of the reinforcing fibers during the  curing reaction of the thermosetting resin or during preheating before the curing reaction.

In the molding step, it is preferred to preheat the mold, since productivity can be further enhanced.

The integrating method used for producing the integrally formed article of the invention is not especially limited either. For example, there are a method of using an adhesive for integration and a method of using bolts and screws for integration. For integrating with a thermoplastic member, thermal welding, vibration welding, ultrasonic welding, laser welding, insert injection molding, outsert injection molding, etc. can be preferably used. In view of molding cycle, outsert molding and insert molding can be preferably used.

The sandwich structure and the integrally formed article using the sandwich structure, respectively of the invention, can be used, for example, for the following applications: parts, members and housings of electric and electronic apparatuses such as various gears, various cases, sensors, LED lamps, connectors, sockets, resistors, relay cases, switches, coil bobbins, capacitors, optical pickups, vibrators, various terminal boards, transformers, plugs, printed wiring boards, tuners, speakers, microphones, headphones, small motors, magnetic head bases, power modules, semiconductors, displays, FDD carriages, chassis, HDD, MO, motor brush holders, parabola antennas, notebook-type personal computers, cell phones, digital still cameras, PDA, portable MD and plasma displays, parts, members and housings of household and office products such as telephone sets, facsimiles, VTRs, copiers, television sets, irons, hair dryers, rice cookers, electronic ovens, acoustic apparatuses, cleaners, toiletries, laser discs, compact discs, lightings, refrigerators, air conditioners, typewriters and word processors, parts, members and housings of game and amusement products such as pinball machines, slot machines and game machines, parts, members and housings of optical apparatuses and precision machines such as microscopes, binoculars, cameras and time pieces, medical appliances such as X-ray cassettes, parts, members and outside plates of motor vehicles and two-wheelers such as motor parts, alternator terminals, alternator connectors, IC regulators, potentiometer bases, suspension parts, various valves such as exhaust gas valves, various pipes for fuel, exhaust gas and suction, air intake nozzle snorkels, intake manifolds, various arms, various frames, various hinges, various bearings, fuel pumps, gasoline tanks, CNG tanks, engine cooling water joints, carburetor main bodies, carburetor spacers, exhaust gas sensors, cooling water sensors, oil temperature sensors, brake pad wear sensors, throttle position sensors, crankshaft position sensors, air flow meters, air conditioner thermostat bases, room heating hot air flow control valves, radiator motor brush holders, water pump impellers, turbine vanes, wiper motor parts, distributors, starter switches, starter relays, transmission wire harnesses, window washer nozzles, air conditioner panel switch boards, fuel electromagnetic valve coils, fuse connectors, battery trays, AT  brackets, head lamp supports, pedal housings, steering wheels, door beams, protectors, chassis, frames, armrests, horn terminals, step motor rotors, lamp sockets, lamp reflectors, lamp housings, brake pistons, noise shields, radiator supports, spare tire covers, seat shells, solenoid bobbins, engine oil filters, ignition device cases, under covers, scuff plates, pillar trims, propeller shafts, wheels, fenders, fascias, bumpers, bumper beams, bonnets, aero parts, platforms, cowl louvers, roofs, instrument panels, spoilers and various modules, parts, members and outside plates of aircraft such as landing gear pods, winglets, spoilers, edges, rudders, elevators, fairings and ribs, parts and members of sports goods such as various rackets, golf club shafts, yachts, boards, skiing articles, fishing rods and bicycles, parts of artificial satellites, architectural materials such as panels, etc.

Among the above applications, the products of the invention can be preferably used for electric and electronic apparatuses and office automation apparatuses such as personal computers, displays, cell phones and portable information terminals, household electric appliances and medical appliances. Especially among the above applications, it is preferred that the sandwich structure of the invention is used at a top face portion (top plate) of a housing, a surface of which has a wide range of flat portion, since it can exhibit such features as thinness, lightweight and high stiffness sufficiently.

The invention is described below more particularly based on examples. In the following examples, all the mixing rates (%) are values based on wt%, unless otherwise stated.

The object evaluation methods used in the examples are as follows.

(1) Bending modulus of elasticity of a sandwich structure

"Instron" (registered trademark) 5565 Universal Testing Machine (produced by Instron Japan Co., Ltd.) was used to measure the bending modulus of elasticity at a testing speed of 1.27 mm/min based on ISO 178.

Four types of specimens different in angle (0 degrees, 45 degrees, 90 degrees and 135 degrees in reference to the longitudinal direction of the sandwich structure) were cut out of the flat portion of the sandwich structure. Five specimens were prepared for each type. The average value of the bending modulus values of four types of specimens different in angle was employed as the bending modulus of elasticity of the sandwich structure.

(2) Adhesive strength between the core component (I) and the fiber reinforced components (II) of a sandwich structure

"Instron" (registered trademark) 5565 Universal Testing Machine (produced by Instron Japan Co., Ltd.) was used to measure the adhesive strength at a testing speed of 1.27 mm/min based on ASTM D 3846.

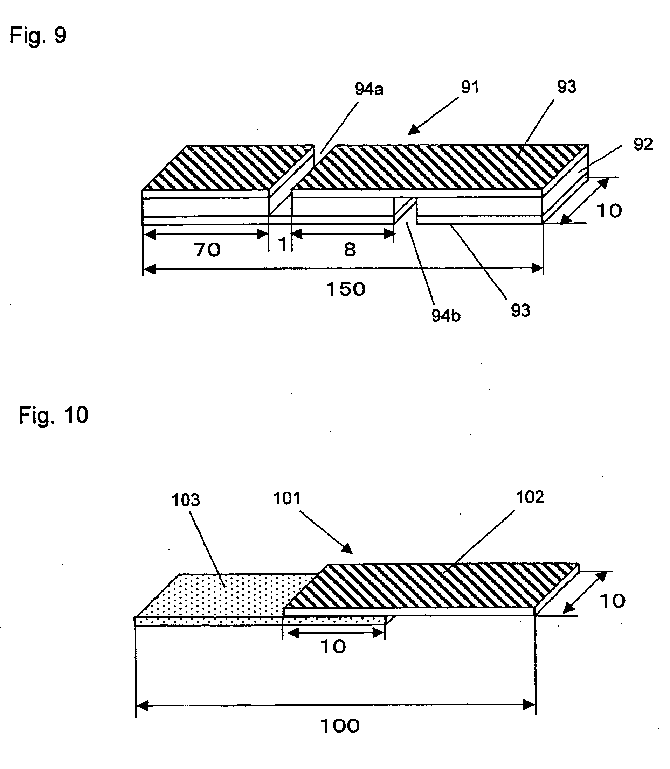

Fig. 9 shows the form and dimensions (in mm) of a specimen 91. The specimen 91 has a core component (I) 92 and fiber reinforced components (II) 93 bonded on both surfaces of the core component (I) 92, and has notches 94a and 94b as shown in the drawing. Meanwhile, in the case where a specimen of the specified size cannot be cut out of the sandwich structure, a smaller-sized specimen proportional in shape to the specimen shown in Fig. 9 can be used as a substitute. The adhesive strength (in MPa) can be calculated from the following formula:

$$\text{Adhesive strength (MPa)} = \text{Breaking load (N)/Overlap area (mm}^2)$$

$$\text{Overlap area (mm}^2) = \text{Width (mm)} \times \text{Overlap length (mm)}$$

(3) Adhesive strength of an integrally formed article

"Instron" (registered trademark) 5565 Universal Testing Machine (produced by Instron Japan Co., Ltd.) was used to measure the adhesive strength at a testing speed of 1.27 mm/min based on ISO 4587.

Fig. 10 shows the form and dimensions (in mm) of a specimen 101. The specimen 101 has a first member 102 and a second member 103 bonded to the underside of the first member. Meanwhile, in the case where a specimen of the specified size cannot be cut out of the integrally formed article, a small-sized specimen proportional in shape to the specimen of Fig. 10 can be used as a substitute. The adhesive strength (in MPa) can be calculated from the following formula:

$$\text{Adhesive strength (MPa)} = \text{Breaking load (N)/Overlap area (mm}^2)$$

$$\text{Overlap area (mm}^2) = \text{Width (mm)} \times \text{Overlap length (mm)}$$

Meanwhile, the following simpler method can be employed. A specimen including the joint portion between the first member and the second member is cut out of the integrally formed article, and the first member is fixed by one clamp while the second member is fixed by the other clamp. Then, a tensile test is performed by pulling in parallel to the joint interface, and the obtained strength is divided by the adhesion area, to employ the quotient as a substitute value.

Examples of preparing the materials used in the following examples of the invention are described below.

Reference Example 1-1

Pellets of a polyamide resin (CM8000 quaternary copolyamide 6/66/610/12, melting point 130°C, produced by Toray Industries, Inc.) were processed into a film (F-1) having a size of 350 x 350 mm and a unit weight of 50 g/m$^2$.

Reference Example 1-2

Pellets obtained by melt-kneading 30 wt% of an acid modified polypropylene resin (YUMEX 1010, acid value about 52, melting point 142°C, produced by Sanyo Chemical Industries, Ltd.) and 70 wt% of polypropylene resin (J229E, melting point 155°C, produced by Mitsui Chemicals, Inc.) at 200°C using a double-screw extruder (TEX-30$\alpha$) produced by The Japan Steel Works, Ltd., were processed into a film (F-2) having a size of 350 x 350 mm and a unit weight of 30 g/m$^2$.

Meanwhile, the pellets were preheated at 160°C for 8 minutes and their melt viscosity was measured at a load of 10 kgf using capillary rheometer CFT-500D produced by Shimadzu Corporation and found to be 185 Pa·s.

Example 1

From a prepreg in which a group of unidirectionally arranged carbon fibers was impregnated with an epoxy resin (thermosetting resin) ("Torayca (registered trademark)" Prepreg P3052S-12 produced by Toray Industries, Inc. and "Torayca (registered trademark)" T700S were used, carbon fiber content 67 wt%, fiber weight 125 g/m$^2$), four prepreg sheets having a size of 350 x 350 mm were cut out to have a predetermined form. These sheets were used to obtain a laminate comprising 0 degrees/90 degrees/film (F-2)/core component/film (F-2)/90 degrees/0 degrees/film (F-1) in reference to the fiber direction. As the core component, "EFCELL (registered trademark)" RC2010 (closed cell polypropylene foam, thickness 1 mm, specific gravity 0.48) produced by Showa Denko K.K. was used.

Then, as a releasing film, one each "Tedlar (registered trademark)" film produced by Du-Pont Toray Co., Ltd. was disposed at the top and bottom of the laminate, and the laminate was set on a SUS flat plate for press molding and heated at 150°C for 10 minutes and subsequently at 130°C for 20 minutes at a face pressure of 1 MPa for curing the epoxy resin. After completion of curing, the laminate was cooled at room temperature, and then the releasing films were removed to obtain a formed sandwich board. From the sandwich board, a top plate 1 having a size of 300 x 280 mm was cut out with the fiber direction as the longitudinal direction of the top plate, for use as a sandwich structure (III).

The sandwich structure (III) 8 had a thickness of 1.4 mm, and having been affected by the heating and pressurization during molding, the core component (I) 6 was thinned to 0.8 mm. The bending modulus of elasticity was 35 GPa. The adhesive strength between the core component (I) 6 and the fiber reinforced components (II) 7 was measured. The interfacial delamination did not occur, and at a tensile force of 3 MPa, the core component (I) 6 was broken. The joint portion between the core component (I) 6 and the fiber reinforced components (II) 7 of the sandwich structure (III) 8 was cut out and its section was observed using an optical microscope. As shown in Fig. 3, the thermoplastic resin constituting the films (F-2) was observed as regions different in contrast in the fiber reinforced components. The regions of the modified polyolefin resin layers impregnated into the thickness direction of the reinforcing fiber bundles, and it was found that the maximum impregnation length 18 was 20 $\mu$m.

The obtained sandwich structure (III) 8 was inserted into a mold for injection molding, and long fiber pellets (TLP1146S, carbon fiber content 20 wt%, polyamide resin matrix, produced by Toray Industries, Inc.) were used to perform outsert injection molding to form a second member 2 as a frame having a boss rib portion 4 and a hinge portion 5 around the outer circumference of the sandwich structure (III) 8. For the injection molding, J350EIII injection molding machine produced by The Japan Steel Works, Ltd. was used and the cylinder temperature was set at 280°C. The obtained integrally formed article 3 had both the members bonded to each other having an overlap length of about 5 mm at least in the portion with the film (F-1) disposed, being strongly integrated.

The obtained integrally formed article had a weight of 144 g and was confirmed to be integrally formed as a housing excellent in lightweight and stiffness. When the adhesive strength of the integrally formed article was measured, the interfacial delamination did not occur, and at a tensile force of 10 MPa, the frame member was broken. From the integrally formed article, the joint portion between the corresponding fiber reinforced component (II) of the sandwich structure and the frame member was cut out and dissolved in formic acid for 12 hours, to remove the thermoplastic resin portion, for preparing a specimen for section observation. The specimen was observed with a scanning electron microscope (SEM), and as shown in Fig. 5, a state in which the carbon fiber group was exposed was observed. Further, a double layer structure having a carbon fiber group having voids in the joint interface direction and a carbon fiber group not having voids in the opposite direction was observed, and it was confirmed that the boundary interface between the matrix resin reinforced by the continuous reinforcing fiber group and the adhesive layer formed of a thermoplastic resin had a rugged form. The void portion of the carbon fiber group is the region where the thermoplastic resin layer having the reinforcing fibers embedded in it existed. From its thickness, the maximum impregnation thickness 57 was judged to be 40 $\mu$m.

Example 2

The "EFCELL" RC2010 was cut out to have a constant thickness of 0.8 mm, and it was used as the core component (I). The sandwich structure (III) was formed by curing the epoxy resin at 130°C and at a face pressure of 1 MPa for 30 minutes. By the same methods as in Example 1, the sandwich structure (III) and an integrally formed article were produced.

The sandwich structure as a top plate had a thickness of 1. 3 mm and a bending modulus of elasticity of 35 GPa. The adhesive strength between the core component (I) and the fiber reinforced components (II) was 2 MPa, and their joint interfaces were confirmed to have the same impregnation structure as in Example 1. The maximum impregnation length 18 was 15 $\mu$m.

The obtained integrally formed article had a weight of 136 g, and was confirmed to be integrally formed as a housing excellent in lightweight and stiffness. When the adhesive strength of the integrally formed article was measured, the interfacial delamination did not occur, and at a tensile force of 10 MPa, the frame member was broken. The maximum impregnation thickness 57 was 30 $\mu$m.

Example 3

A sandwich structure (III) was produced according to the same method as in Example 2, except that the film (F-1) was not used.

Separately long fiber pellets (TLP1146S, carbon fiber content 20 wt%, polyamide resin matrix, produced by Toray Industries, Inc.) were injection-molded to obtain a second member 2 as a frame having a boss rib portion 4 and a hinge portion 5.

The sandwich structure (III) and the second member respectively obtained were washed by alcohol on their joint faces and were bonded to each other using two-pack type adhesive 3921/3926 produced by Three Bond Co., Ltd., to produce an integrally formed article 3. After completion of bonding, the article was allowed to stand at room temperature for 24 hours.

The obtained integrally formed article had a weight of 139 g and was conformed to be integrally formed as a housing excellent in lightweight and stiffness. Further, the adhesive strength of the integrally formed article was 7 MPa.

Example 4

From a prepreg in which carbon fiber cloth was impregnated with an epoxy resin (thermosetting resin) ("Torayca (registered trademark)" Prepreg F6142-05 produced by Toray Industries, Inc. and Torayca T300 produced by Toray Industries, Inc. were used, carbon fiber content 60 wt%, fiber weight 119 g/m$^2$), two prepreg sheets having a size of 350 x 350 mm were cut out to have a predetermined form. These sheets were used to obtain a laminate comprising (0 degrees/90 degrees)/film (F-2)/core component/film (F-2)/(0 degrees/90 degrees) in reference to the fiber direction, and the laminate was used to produce a sandwich structure (III) according to the same method as in Example 1.

The sandwich structure (III) as a top plate had a thickness of 1.2 mm and a bending modulus of elasticity of 32 GPa. When the adhesive strength between the core component (I) and the fiber reinforced components (II) was measured, the interfacial delamination did not occur, and at a tensile force of 3 MPa, the core component was broken.

At their joint interfaces, the same impregnation structure as in Example 1 was confirmed, and the maximum impregnation length 18 was 20 $\mu$m. According to the same method as in Example 3, a second member 2 was produced by injection molding, and an integrally formed article 3 having the sandwich structure (III) was produced.

The obtained integrally formed article had a weight of 113 g, and was confirmed to be integrally formed as a housing very excellent in lightweight and good in stiffness.

Example 5

An integrally formed article 3 was produced according to the same method as in Example 1, except that "Ohfan (registered trademark) " P23 (polypropylene sheet, thickness 0.3 mm, specific gravity 0.91) produced by Osaka Jushi Kako K.K. was used as the core component.
The sandwich structure as a top plate had a thickness of 0.8 mm and a bending modulus of elasticity of 38 GPa. When the adhesive strength between the core component (I) and the fiber reinforced components (II) was measured, the interfacial delamination did not occurred, and at a tensile force of 6 MPa, the core component (I) was broken. At their joint interfaces, the same impregnation structure as in Example 1 was confirmed, and the maximum impregnation length 18 was 20 μm.
The obtained integrally formed article had a weight of 127 g and was confirmed to be integrally formed as a housing excellent in lightweight and stiffness. When the adhesive strength of the integrally formed article was measured, the interfacial delamination did not occur, and at a tensile force of 10 MPa, the frame member was broken. The maximum impregnation thickness 57 was 30 μm.

Example 6

An integrally formed article 3 was produced according to the same method as in Example 4, except that a 1 mm thick sheet obtained by slicing "Toraypef (registered trademark)" 30060 (closed cell polyethylene foam, thickness 6 mm, specific gravity 0.03) produced by Toray Industries, Inc. was used as the core component.
The sandwich structure as a top plate had a thickness of 1.4 mm and a bending modulus of elasticity of 30 GPa. When the adhesive strength between the core component (I) and the fiber reinforced components (II) was measured, the interfacial delamination did not occur, and at a tensile force of 1 MPa, the core component was broken. At their joint interfaces, the same impregnation structure as in Example 1 was confirmed, and the maximum impregnation length 18 in this case was 20 μm.
The obtained integrally formed article had a weight of 84 g and was confirmed to be integrally formed as a housing excellent in lightweight and stiffness. When the adhesive strength of the integrally formed article was measured, the interfacial delamination did not occur, and at a tensile force of 10 MPa, the frame member was broken. The maximum impregnation thickness 57 was 30 μm.
Examples of preparing the materials used in the following examples of the invention are described below.

Reference Example 2-1

A copolymer mainly composed of polyacrylonitrile was spun and burned to prepare carbon fibers as 24000 filaments in total. The properties of the carbon fibers were as follows.

| | |
|---|---|
| Mass per unit length | 1.7 g/m |
| Specific gravity | 1. 8 g/cm$^3$ |
| Tensile strength | 5 GPa |
| Tensile modulus of elasticity | 235 GPa |

The obtained carbon fibers were electrolytically treated on the surfaces at 3 coulombs per 1 g of the carbon fibers in an aqueous solution containing sulfuric acid as an electrolyte, and further a sizing agent was deposited. At first, an aqueous solution containing 4% of polyoxyethylene oleyl ether represented by the following chemical formula:

$$C_{18}H_{35}O\text{- }(CH_2CH_2O)_8\text{-H}$$

and having a number average molecular weight of 600 and an HLB of 11.3 was prepared, and the carbon fibers were immersed in the aqueous solution, so that 1.5 wt% of polyoxyethylene oleyl ether was deposited on the carbon fibers. The carbon fibers were dried at 200°C for 2 minutes using a hot air dryer and cut to a length of 6.4 mm using a cartridge cutter, to obtain chopped carbon fibers.
Respectively predetermined amounts of the obtained chopped carbon fibers and a powder obtained by freeze-grinding polyamide 6 resin (CM1001, melting point 215°C produced by Toray Industries, Inc.) to an average particle size of 300 μm were formed into a web by a paper-making method, and the web was dried at 140°C to remove water. The obtained web was heated and pressed at 240°C and at a face pressure of 0.5 MPa for 8 minutes and cooled at room temperature, to obtain a core component (C-1) having a thickness of 0.6 mm, a unit weight of 150 g/m$^2$, a specific gravity of 0.25 and a carbon fiber content of 33 wt%.

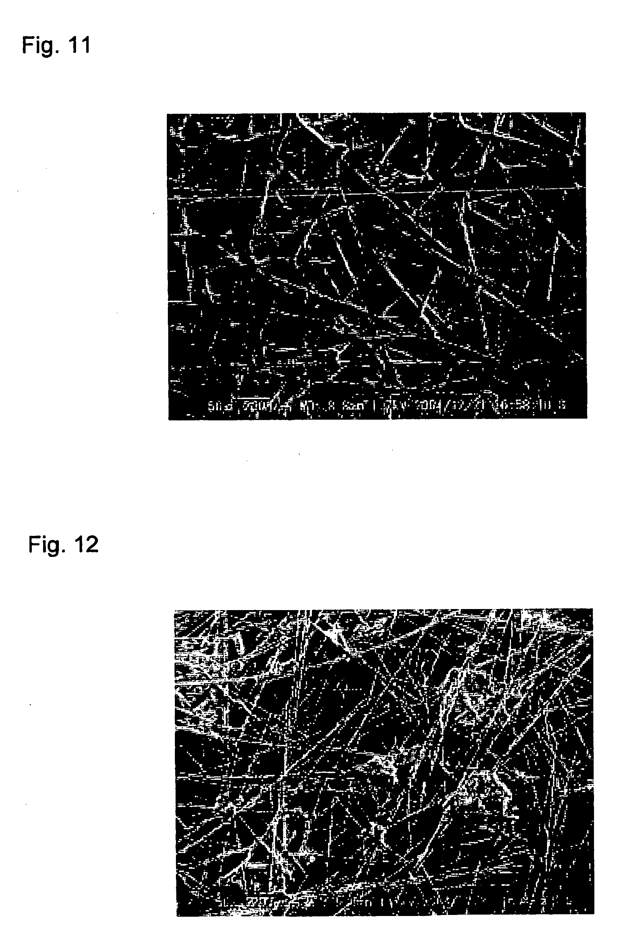

Fig. 11 is an SEM photograph showing the surface of the core component (I). As can be seen from Figs. 4 and 11, carbon fiber filaments 41 cross each other to form a void structure (network structure) 44. As can be seen from Figs. 4 and 11, almost all the crossing portions 42 are covered with the polyamide 6 resin 43.

Reference Example 2-2

A web obtained according to the same method as in Reference Example 2-1 was heated and pressed at 240°C and at a face pressure of 0.5 MPa for 2 minutes and cooled at room temperature, to obtain a core component (C-2) having a thickness of 1.5 mm, a unit weight of 400 g/m$^2$, a specific gravity of 0.27 and a carbon fiber content of 33 wt%.
Fig. 12 is an SEM photograph showing the surface of the core component (I). It can be seen that the crossing portions 42 of the carbon fiber filaments 41 covered with the polyamide 6 resin 43 account for less than 50% of all the crossing portions 42.

Reference Example 2-3

Pellets of a polycarbonate resin (Lexan 121R, load deflection temperature 130°C, produced by Japan GE Plastics Co., Ltd.) were processed into a film (F-3) having a size of 350 x 350 mm and a unit weight of 30 g/m$^2$

Example 7

The core component (C-1) prepared in Reference Example 2-1 was used as the core component (I) to prepare a laminate comprising 0 degrees/90 degrees/film (F-3)/core component/film (F-3) /90 degrees/0 degrees/film (F-1), and a sandwich structure (III) and an integrally formed article were produced according to the same methods as in Example 1.
The sandwich structure (III) as a top plate had a thickness of 1.1 mm and a bending modulus of elasticity of 36 GPa. The adhesive strength between the core component (I) and the fiber reinforced components (II) was 2 MPa, and at their joint interfaces, the same impregnation structure as in Example 1 was confirmed. The maximum impregnation length 18 was 15 $\mu$m.
The obtained integrally formed article had a weight of 117 g and was confirmed to be integrally formed as a housing excellent in lightweight and stiffness. When the adhesive strength of the integrally formed article was measured, the interfacial delamination did not occur, and at a tensile force of 10 MPa, the frame member was broken. The maximum impregnation thickness 57 was 30 $\mu$m.

Example 8

The core component (C-2) prepared in Reference Example 2-2 was used as the core component (I), and a sandwich structure (III) and an integrally formed article were produced according to the methods as in Example 7.
The sandwich structure (III) as a top plate had a thickness of 1.5 mm, and the core component (I) was made thinner to 1. 0 mm due to the influence of heating and pressurization during forming. The bending modulus of elasticity was 32 GPa. The adhesive strength between the core component (I) and the fiber reinforced components (II) was 0.5 MPa. At their joint interfaces, the same impregnation structure as in Example 1 was confirmed, and the maximum impregnation length 18 was 15 $\mu$m.
The obtained integrally formed article had a weight of 138 g and was confirmed to be integrally formed as a housing excellent in lightweight and stiffness. When the adhesive strength of the integrally formed article was measured, the interfacial delamination did not occur, and at a tensile force of 10 MPa, the frame member was broken. The maximum impregnation thickness 57 was 30 $\mu$m.

Industrial Applicability

The sandwich structure of the invention has excellent mechanical properties, lightweight and thinness based on its characteristic structure. The method for producing a sandwich structure of the invention has excellent mass productivity, and the production can be performed very economically compared with the conventional production. The integrally formed article having the sandwich structure of the invention can be suitably used as a part, member or housing of an electric or electronic apparatus such as a notebook-type personal computer.

**Claims**

**1.** A sandwich structure (III) (8) comprising a core component (I) 6, 11) and one each fiber reinforced component (II) (7, 12) composed of continuous reinforcing fibers (A) (15) and a matrix resin (B) (16) and disposed on both surfaces of said core component (I) (6, 11), in which said core component (I) (6, 11) has voids, a thickness of 0.1 to 1.5 mm and a specific gravity of 0.01 to 1.2; and the adhesive strength between said core component (I) (6, 11) and said fiber reinforced components (II) (7, 12) measured according to ASTM D 3846 is 1 MPa or more, wherein said core component (I) (6, 11) is formed of a polyolefin resin, and wherein a modified polyolefin resin layer (14) is disposed between said core component (I) (6, 11) and said fiber reinforced components (II) (7, 12), further wherein a modified polyolefin resin constituting said modified polyolefin resin layer (14) is impregnated into bundles of said reinforcing fibers (A) (15) used in said fiber reinforced component (II) (7, 12).

2. The sandwich structure (III) (8) according to claim 1, wherein said core component (I) (6, 11) comprises a foamed body having closed cells.

3. The sandwich structure (III) (8) according to claim 1 or 2, wherein the melt viscosity of said modified polyolefin resin measured at 160°C is 10 to 500 Pa·s.

4. The sandwich structure (III) (8) according to claim 1, 2 or 3, wherein said modified polyolefin resin contains 20 wt% or more of an acid-modified polyolefin resin that has an acid value of 10 or more.

5. A sandwich structure (III) (8) comprising a core component (I) (6, 11) and one each fiber reinforced component (II) (7, 12) composed of continuous reinforcing fibers (A) (15) and a matrix resin (B) (16) and disposed on both surfaces of said core component (I) (6, 11), in which said core component (I) (6, 11) is composed of discontinuous reinforcing fibers (41) and a thermoplastic resin (43); filaments of said discontinuous reinforcing fibers (41) cross each other to form a void structure; said thermoplastic resin (43) is disposed at crossing portions (42) of the discontinuous reinforcing fibers (41); and said core component (I) (6, 11) has a thickness of 0.1 to 1.5 mm and a specific gravity of 0.1 to 1.0, wherein a thermoplastic resin layer is disposed between a layer of said core (I) (6, 11) and a layer of said fiber reinforced components (II) (7, 12); and a thermoplastic resin constituting said thermoplastic resin layer has a melting point or a load deflection temperature of 160°C or lower, and wherein said thermoplastic resin constituting said thermoplastic resin layer is impregnated into bundles of said reinforcing fibers (A) (15) used in said fiber reinforced component (II) (7, 12).

6. The sandwich structure (III) (8) according to claim 5, wherein the crossing portions (42) of filaments in said core component (I) (6, 11) deposited with said thermoplastic resin (43) account for 50% or more of all the crossing portions (42).

7. The sandwich structure (III) (8) according to claim 5 or 6, wherein said thermoplastic resin (43) has a melting point or a load deflection temperature of 160°C or higher.

8. The sandwich structure (III) (8) according to claim 1 or 5, wherein said reinforcing fibers (A) (15) are carbon fibers.

9. The sandwich structure (III) (8) according to claim 1 or 5, wherein said matrix resin (B) (16) is a thermosetting resin.

10. An integrally formed article (3) in which a sandwich structure (III) (8) as set forth in claim 1 or 5 as a first member (1, 51) and another structural member as a second member (2, 52) are bonded to each other; said first member (1, 51) has a planar form; and said second member (2, 52) has its shape changed in the thickness direction.

11. The integrally formed article (3) according to claim 10, wherein said first member (1, 51) and said second member (2, 52) are bonded to each other through an adhesive layer (54).

12. The integrally formed article (3) according to claim 11, wherein said adhesive layer (54) is formed of a thermoplastic resin.

13. The integrally formed article (3) according to claim 12, wherein said adhesive layer (54) is bonded to said fiber reinforced component (II) (7, 12); and said thermoplastic resin constituting said adhesive layer (54) and said matrix resin (B) (16, 59) used in said fiber reinforced component (II) (7, 12) are bonded to each other with ruggedness formed at the joint interface.

14. The integrally formed article (3) according to any one of claims 10 to 13, wherein said second member (2, 52) is a member made of a thermoplastic resin composition.

15. An electric or electronic apparatus in which an integrally formed article (3) as set forth in any one of claims 10 to 14 is used to form a part, member or housing thereof.

16. A method for producing a sandwich structure as set forth in claim 1 or 5, comprising a lamination step of disposing one each thermally adhesive substrate (m) formed of a thermoplastic resin on both surfaces of a core component (I) and laminating and disposing one each prepreg component obtained by impregnating a thermosetting resin as a matrix resin (B) into bundles of the continuous reinforcing fibers (A), onto said thermally adhesive substrates (m), and a molding step of disposing a laminate obtained by said lamination step into a mold and letting heat and pressure act for molding, wherein said thermoplastic resin of said thermally adhesive substrates (m) is impregnated into said bundles of said reinforcing fibers (A) during curing reaction of said thermosetting resin or during preheating before curing reaction in said molding step.

17. The method for producing the sandwich structure, according to claim 16, wherein a step of disposing a thermally adhesive substrate (n) formed of a thermoplastic resin further on a surface of a laminate obtained by said lamination step is undergone; subsequently said laminate covered with said thermally adhesive substrate (n) is supplied to said molding step; and said thermoplastic resin of said thermally adhesive substrate (n) is impregnated into said bundles of said reinforcing fibers during said curing reaction of said thermosetting resin or during preheating before said curing reaction.

18. A method for producing an integrally formed article as set forth in any one of claims 10 to 14, **characterized in that** a sandwich structure (III) as set forth in claim 1 or 5 as a first member and another structural member as a second member are bonded to each other by at least one integration method selected from the group consisting of thermal welding, vibration welding, ultrasonic welding, laser welding, insert injection molding, and outsert injection molding.

**Patentansprüche**

1. Sandwich-Struktur (III) (8), umfassend eine Kernkomponente (I) (6, 11) und jeweils eine faserverstärkte Komponente (II) (7, 12), die aus kontinuierlichen Verstärkungsfasern (A) (15) und einem Matrixharz (B) (16) besteht und auf beiden Oberflächen der Kernkomponente (I) (6, 11) angeordnet ist, in welcher die Kernkomponente (I) (6, 11) Hohlräume, eine Dicke von 0,1 bis 1,5 mm und ein spezifisches Gewicht von 0,01 bis 1,2 aufweist; und die Haftfestigkeit zwischen der Kernkomponente (I) (6, 11) und den faserverstärkten Komponenten (II) (7, 12), gemessen gemäß ASTM D 3846, 1 MPa oder mehr beträgt, wobei die Kernkomponente (I) (6, 11) aus einem Polyolefinharz gebildet wird und wobei eine modifizierte Polyolefinharzschicht (14) zwischen der Kernkomponente (I) (6, 11) und den faserverstärkten Komponenten (II) (7, 12) angeordnet ist, wobei ferner ein modifiziertes Polyolefinharz, das die modifizierte Polyolefinharzschicht (14) bildet, zu Bündeln der Verstärkungsfasern (A) (15), die in der faserverstärkten Komponente (II) (7, 12) verwendet werden, imprägniert wird.

2. Sandwich-Struktur (III) (8) gemäß Anspruch 1, wobei die Kernkomponente (I) (6, 11) einen geschäumten Körper mit geschlossenen Zellen aufweist.

3. Sandwich-Struktur (III) (8) gemäß Anspruch 1 oder 2, wobei die Schmelzviskosität des modifizierten Polyolefinharzes, gemessen bei 160°C, 10 bis 500 Pa·s beträgt.

4. Sandwich-Struktur (III) (8) gemäß Anspruch 1, 2 oder 3, wobei das modifizierte Polyolefinharz 20 Gewichts-% oder mehr eines Säure-modifizierten Polyolefinharzes enthält, welches eine Säurezahl von 10 oder mehr aufweist.

5. Sandwich-Struktur (III) (8), umfassend eine Kernkomponente (I) (6, 11) und jeweils eine faserverstärkte Komponente (II) (7, 12), die aus kontinuierlichen Verstärkungsfasern (A) (15) und einem Matrixharz (B) (16) besteht und auf beiden Oberflächen der Kernkomponente (I) (6, 11) angeordnet ist, in welcher die Kernkomponente (I) (6, 11) aus diskontinuierlichen Verstärkungsfasern (41) und einem thermoplastischen Harz (43) besteht; worin Filamente der diskontinuierlichen Verstärkungsfasern (41) einander kreuzen, um eine Hohlraumstruktur zu bilden; worin das thermoplastische Harz (43) an Kreuzungsstellen (42) der diskontinuierlichen Verstärkungsfasern (41) angeordnet ist und worin die Kernkomponente (I) (6, 11) eine Dicke von 0,1 bis 1,5 mm und ein spezifisches Gewicht von 0,1 bis 1,0 aufweist, wobei eine thermoplastische Harzschicht zwischen einer Schicht des Kerns (I) (6, 11) und einer Schicht der faserverstärkten Komponenten (II) (7, 12) angeordnet ist; und ein thermoplastisches Harz, das die thermoplastische Harzschicht bildet, einen Schmelzpunkt oder eine Lastverformungstemperatur von 160°C oder niedriger aufweist und wobei das thermoplastische Harz, das die thermoplastische Harzschicht bildet, zu Bündeln der Verstärkungsfasern (A) (15), die in der faserverstärkten Komponente (II) (7, 12) verwendet werden, imprägniert wird.

6. Sandwich-Struktur (III) (8) gemäß Anspruch 5, wobei die Kreuzungsstellen (42) der Filamente in der Kernkomponente (I) (6, 11), welche mit dem thermoplastischen Harz (43) beschichtet sind, 50% oder mehr von allen Kreuzungsstellen (42) ausmachen.

7. Sandwich-Struktur (III) (8) gemäß Anspruch 5 oder 6, wobei das thermoplastische Harz (43) einen Schmelzpunkt oder eine Lastverformungstemperatur von 160°C oder höher aufweist.

8. Sandwich-Struktur (III) (8) gemäß Anspruch 1 oder 5, wobei die Verstärkungsfasern (A) (15) Kohlefasern sind.

9. Sandwich-Struktur (III) (8) gemäß Anspruch 1 oder 5, wobei das Matrixharz (B) (16) ein wärmehärtbares Harz ist.

10. Integral geformter Gegenstand (3), in welchem eine, in Anspruch 1 oder 5 dargelegte Sandwich-Struktur (III) (8) als ein erstes Element (1, 51) und ein anderes strukturelles Element als ein zweites Element (2, 52) miteinander verbunden sind, wobei das erste Element (1, 51) eine ebene Form aufweist und das zweite Element (2, 52) seine Form in Richtung der Dicke ändert.

11. Integral geformter Gegenstand (3) gemäß Anspruch 10, wobei das erste Element (1, 51) und das zweite Element (2, 52) miteinander durch eine Klebeschicht (54) verbunden sind.

12. Integral geformter Gegenstand (3) gemäß Anspruch 11, wobei die Klebeschicht (54) aus einem thermoplastischen Harz gebildet ist.

13. Integral geformter Gegenstand (3) gemäß Anspruch 12, wobei die Klebeschicht (54) auf die faserverstärkte Komponente (II) (7, 12) geklebt wird und das thermoplastische Harz, das die Klebeschicht (54) bildet, und das Matrixharz (B) (16, 59), das in der faserverstärkten Komponente (II) (7, 12) verwendet wird, miteinander über die Rauheit, die sich an der Kontaktfläche ausbildet, verbunden sind.

14. Integral geformter Gegenstand (3) gemäß einem der Ansprüche 10 bis 13, wobei das zweite Element (2, 52) ein Element darstellt, das aus einer thermoplastischen Harzzusammensetzung hergestellt wird.

15. Elektrisches oder elektronisches Gerät, bei welchem ein, in einem der Ansprüche 10 bis 14 dargelegter, integral geformter Gegenstand (3) ein Teil, Element oder Gehäuse desselben darstellt.

16. Verfahren zur Herstellung einer Sandwich-Struktur, wie in Anspruch 1 oder 5 dargelegt, umfassend einen Laminierungsschritt, in dem jeweils ein thermisch adhäsives Substrat (m), das aus einem thermoplastischen Harz gebildet wird, auf beide Oberflächen einer Kernkomponente (I) angeordnet wird und in dem jeweils eine Prepreg-Komponente, die durch Imprägnieren eines wärmehärtenden Harzes als Matrixharz (B) zu Bündeln der kontinuierlichen Verstärkungsfasern (A) gebildet wird, auf die thermisch adhäsiven Substrate (m) laminiert und angeordnet wird, und einen Formungsschritt, in dem ein Laminat, das durch den Laminierungsschritt erhalten wird, in eine Form angeordnet wird und Hitze und Druck zur Formung wirken können, wobei das thermoplastische Harz der thermisch adhäsiven Substrate (m) während des Härtens des wärmehärtenden Harzes oder beim Vorwärmen vor dem Härten, in dem Formungsschritt, zu Bündeln der kontinuierlichen Verstärkungsfasern (A) imprägniert wird.

17. Verfahren zur Herstellung der Sandwichstruktur gemäß Anspruch 16, wobei ferner ein Schritt, in dem ein thermisch adhäsives Substrat (n), das aus einem thermoplastischen Harz gebildet wird, auf einer Oberfläche eines Laminats, das durch den Laminierungsschritt erhalten wird, vollzogen wird; danach wird das Laminat, welches mit dem thermisch adhäsiven Substrat (n) bedeckt ist, dem Formungsschritt zugeführt; und das thermoplastische Harz des thermisch adhäsiven Substrats (n) wird während des Härtens des wärmehärtenden Harzes oder beim Vorwärmen vor dem Härten zu den Bündeln der kontinuierlichen Verstärkungsfasern imprägniert.

18. Verfahren zur Herstellung eines integral geformten Gegenstands, wie in einem der Ansprüche 10 bis 14 dargelegt, **dadurch gekennzeichnet, dass** eine Sandwich-Struktur (III), wie in Anspruch 1 oder 5 dargelegt, als ein erstes Element und ein anderes strukturelles Element als ein zweites Element durch mindestens ein Integrationsverfahren, welches aus der Gruppe bestehend aus Wärmeschweißen, Vibrationsschweißen, Ultraschallschweißen, Laserschweißen, Insert-Spritzgießen und Outsert-Spritzgießen ausgewählt wird, miteinander verbunden werden.

**Revendications**

1. Structure en sandwich (III) (8) comprenant un composant de noyau (I) (6, 11) et un composant renforcé par des fibres (II) (7, 12) composé de fibres de renforcement continues (A) (15) et d'une résine de matrice (B) (16), disposé sur les deux surfaces dudit composant de noyau (I) (6, 11), dans laquelle ledit composant de noyau (I) (6, 11) présente des cavités, une épaisseur comprise entre 0,1 mm et 1,5 mm et une densité comprise entre 0,01 et 1,2 ; et la force d'adhésion entre ledit composant de noyau (I) (6, 11) et lesdits composants renforcés par des fibres (II) (7, 12), mesurée selon la norme ASTM D 3846 est égale ou supérieure à 1 MPa , dans laquelle ledit composant de noyau (I) (6, 11) est formé d'une résine de polyoléfine, et dans laquelle une couche de résine de polyoléfine modifiée (14) est disposée entre ledit composant de noyau (I) (6, 11) et lesdits composants renforcés par des fibres (II) (7, 12), dans laquelle en outre une résine de polyoléfine modifiée qui constitue ladite couche de résine de polyoléfine modifiée (14) est imprégnée dans des faisceaux desdites fibres de renforcement (A) (15) utilisées dans ledit composant renforcé par des fibres (II) (7, 12).

2. Structure en sandwich (III) (8) selon la revendication 1, dans laquelle ledit composant de noyau (I) (6, 11) comprend un corps de mousse qui présente des alvéoles fermées.

3. Structure en sandwich (III) (8) selon la revendication 1 ou 2, dans laquelle la viscosité à l'état fondu de ladite résine de polyoléfine modifiée mesurée à 160 °C, est comprise entre 10 Pa·s et 500 Pa·s.

4. Structure en sandwich (III) (8) selon l'une des revendications 1, 2 ou 3, dans laquelle ladite résine de polyoléfine modifiée contient 20 % en poids ou plus d'une résine de polyoléfine modifiée par un acide qui présente un indice d'acide égal ou supérieur à 10.

5. Structure en sandwich (III) (8) comprenant un composant de noyau (I) (6, 11) et chaque un composant renforcé par des fibres (II) (7, 12) composé de fibres de renforcement continues (A) (15) et d'une résine de matrice (B) (16) et disposé sur les deux surfaces dudit composant de noyau (I) (6, 11), dans laquelle ledit composant de noyau (I) (6, 11) se compose de fibres de renforcement discontinues (41) et d'une résine thermoplastique (43) ; les filaments desdites fibres de renforcement discontinues (41) se croisent de façon à former une structure de cavité ; ladite résine thermoplastique (43) est disposée au niveau des parties de croisement (42) des fibres de renforcement discontinues (41) ; et ledit composant de noyau (I) (6, 11) présente une épaisseur comprise entre 0,1 mm et 1,5 mm et une densité comprise entre 0,1 et 1,0, dans laquelle une couche de résine thermoplastique est disposée entre une couche dudit noyau (I) (6, 11) et une couche desdits composants renforcés par des fibres (II) (7, 12) ; et une résine thermoplastique qui constitue ladite couche de résine thermoplastique présente un point de fusion ou une température de flexion en charge égal ou inférieur à 160 °C, et dans laquelle ladite résine thermoplastique qui constitue ladite couche de résine thermoplastique est imprégnée dans des faisceaux desdites fibres de renforcement (A) (15) utilisées dans ledit composant renforcé par des fibres (II) (7, 12).

6. Structure en sandwich (III) (8) selon la revendication 5, dans laquelle les parties de croisement (42) des filaments dans ledit composant de noyau (I) (6, 11) déposés avec ladite résine thermoplastique (43), représentent 50 % ou plus de toutes les parties de croisement (42).

7. Structure en sandwich (III) (8) selon la revendication 5 ou 6, dans laquelle ladite résine thermoplastique (43) présente un point de fusion ou une température de flexion en charge égal ou supérieur à 160 °C.

8. Structure en sandwich (III) (8) selon la revendication 1 ou 5, dans laquelle lesdites fibres de renforcement (A) (15) sont des fibres de carbone.

9. Structure en sandwich (III) (8) selon la revendication 1 ou 5, dans laquelle ladite résine de matrice (B) (16) est une résine thermodurcissable.

10. Article formé d'une pièce (3) dans lequel une structure en sandwich (III) (8) selon la revendication 1 ou 5 en tant que premier élément (1, 51), et un autre élément structural en tant que second élément (2, 52), sont collés l'un à l'autre ; ledit premier élément (1, 51) présente une forme plane ; et la forme dudit second élément (2, 52) varie dans la direction de l'épaisseur.

11. Article formé d'une pièce (3) selon la revendication 10, dans lequel ledit premier élément (1, 51) et ledit second élément (2, 52) sont collés l'un à l'autre par l'intermédiaire d'une couche adhésive (54).

EP 2 527 139 B1

**12.** Article formé d'une pièce selon la revendication 11, dans lequel ladite couche adhésive (54) est formée d'une résine thermoplastique.

**13.** Article formé d'une pièce (3) selon la revendication 12, dans lequel ladite couche adhésive (54) est collée sur ledit composant renforcé par des fibres (II) (7, 12) ; et ladite résine thermoplastique qui constitue ladite couche adhésive (54) et ladite résine de matrice (B) (16, 59) utilisée dans ledit composant renforcé par des fibres (II) (7, 12), sont collées l'une à l'autre avec une rugosité formée au niveau de l'interface de jointure.

**14.** Article formé d'une pièce (3) selon l'une quelconque des revendications 10 à 13, dans lequel ledit second élément (2, 52) est un élément fabriqué d'une composition de résine thermoplastique.

**15.** Appareil électrique ou électronique dans lequel un article formé d'une pièce (3) selon l'une quelconque des revendications 10 à 14, est utilisé de façon à former une partie, un élément ou un boîtier de celui-ci.

**16.** Procédé destiné à produire une structure en sandwich selon la revendication 1 ou 5, comprenant une étape de stratification consistant à disposer un substrat adhésif de manière thermique (m) réalisé dans une résine thermoplastique sur les deux surfaces d'un composant de noyau (I) et à stratifier et à disposer un composant préimprégné obtenu en imprégnant une résine thermodurcissable en tant que résine de matrice (B) dans des faisceaux de fibres de renforcement continues (A), sur lesdits substrats adhésifs de manière thermique (m), et une étape de moulage consistant à disposer un stratifié obtenu grâce à ladite étape de stratification dans un moule et à laisser agir la chaleur et la pression pour le moulage, dans lequel ladite résine thermoplastique desdits substrats adhésifs de manière thermique (m) est imprégnée dans lesdits faisceaux desdites fibres de renforcement (A) au cours d'une réaction de durcissement de ladite résine thermodurcissable ou au cours d'un préchauffage avant la réaction de durcissement dans ladite étape de moulage.

**17.** Procédé destiné à produire la structure en sandwich, selon la revendication 16, dans lequel est exécutée une étape de disposition d'un substrat adhésif de manière thermique (n) fait d'une résine thermoplastique en outre sur une surface d'un stratifié obtenu grâce à ladite étape de stratification ; par la suite, ledit stratifié recouvert dudit substrat adhésif de manière thermique (n) est fourni à ladite étape de moulage ; et ladite résine thermoplastique dudit substrat adhésif de manière thermique (n) est imprégnée dans lesdits faisceaux desdites fibres de renforcement au cours de ladite réaction de durcissement de ladite résine thermodurcissable ou au cours d'un préchauffage avant ladite réaction de durcissement.

**18.** Procédé destiné à produire un article formé d'une pièce selon l'une quelconque des revendications 10 à 14, **caractérisé en ce qu'**une structure en sandwich (III) selon la revendication 1 ou 5 en tant que premier élément et qu'un autre élément structural en tant que second élément, sont collés l'un à l'autre par au moins un procédé d'intégration choisi parmi le groupe comprenant : un soudage thermique, un soudage par friction vibratoire, un soudage par ultrasons, un soudage au laser, un moulage par injection avec pièce rapportée intérieure et un moulage par injection avec pièce rapportée extérieure.

Fig. 1

Fig. 2

Fig. 3

Fig. 4

Fig. 5

**Fig. 6**

Fig. 7

Fig. 8

## Fig. 9

## Fig. 10

Fig. 11

Fig. 12

**EP 2 527 139 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5138797 A
- JP 2002284038 A
- JP 5042620 A
- JP 2004140255 A
- JP 11300870 A
- JP 7112501 A
- JP 2003080648 A
- EP 0259121 A2
- EP 1072396 A2
- JP 10316771 B